(19) Europäisches Patentamt / European Patent Office / Office européen des brevets

(11) **EP 3 109 687 B1**

(12) **FASCICULE DE BREVET EUROPEEN**

(45) Date de publication et mention de la délivrance du brevet:
**09.09.2020 Bulletin 2020/37**

(51) Int Cl.:
*G02B 27/00* *(2006.01)*      *G02B 27/46* *(2006.01)*

(21) Numéro de dépôt: **16305758.1**

(22) Date de dépôt: **22.06.2016**

(54) **PROCÉDÉ DE CONCEPTION D'UN SYSTÈME D'IMAGERIE, FILTRE SPATIAL ET SYSTÈME D'IMAGERIE COMPORTANT UN TEL FILTRE SPATIAL**

VERFAHREN ZUM ENTWERFEN EINES BILDGEBUNGSSYSTEMS, RAUMFILTER UND BILDGEBUNGSSYSTEM, DAS EINEN SOLCHEN RAUMFILTER UMFASST

METHOD FOR DESIGNING AN IMAGING SYSTEM, SPATIAL FILTER AND IMAGING SYSTEM COMPRISING SUCH A SPATIAL FILTER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.06.2015 FR 1555976**

(43) Date de publication de la demande:
**28.12.2016 Bulletin 2016/52**

(73) Titulaires:
- **COMMISSARIAT À L'ÉNERGIE ATOMIQUE ET AUX ÉNERGIES ALTERNATIVES**
  **75015 Paris (FR)**
- **Centre National de la Recherche Scientifique**
  **75016 Paris (FR)**

(72) Inventeurs:
- **Frugier, Pierre-Antoine**
  **92330 SCEAUX (FR)**
- **Mercier, Patrick**
  **91400 Orsay (FR)**
- **Chavel, Pierre**
  **91400 Orsay (FR)**
- **Goudail, François**
  **91120 Palaiseau (FR)**

(74) Mandataire: **Jacobacci Coralis Harle**
  **32, rue de l'Arcade**
  **75008 Paris (FR)**

(56) Documents cités:
**WO-A1-2015/004659      FR-A1- 2 919 733**

- **YANG ET AL: "Optimized phase pupil masks for extended depth of field", OPTICS COMMUNICATIONS, NORTH-HOLLAND PUBLISHING CO. AMSTERDAM, NL, vol. 272, no. 1, 20 janvier 2007 (2007-01-20), pages 56-66, XP005855176, ISSN: 0030-4018, DOI: 10.1016/J.OPTCOM.2006.11.021**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne de manière générale le domaine des systèmes d'imagerie optique. Elle concerne plus particulièrement un système d'imagerie comprenant un filtre spatial adapté pour modifier la profondeur de champ et/ou la profondeur de mise au point d'un système d'imagerie avec ou sans post-traitement d'image digital.

Elle concerne en particulier une méthode de conception d'un système d'imagerie comprenant un filtre spatial de type masque de phase. L'invention concerne aussi un système d'imagerie comportant un tel filtre spatial.

ARRIERE-PLAN TECHNOLOGIQUE

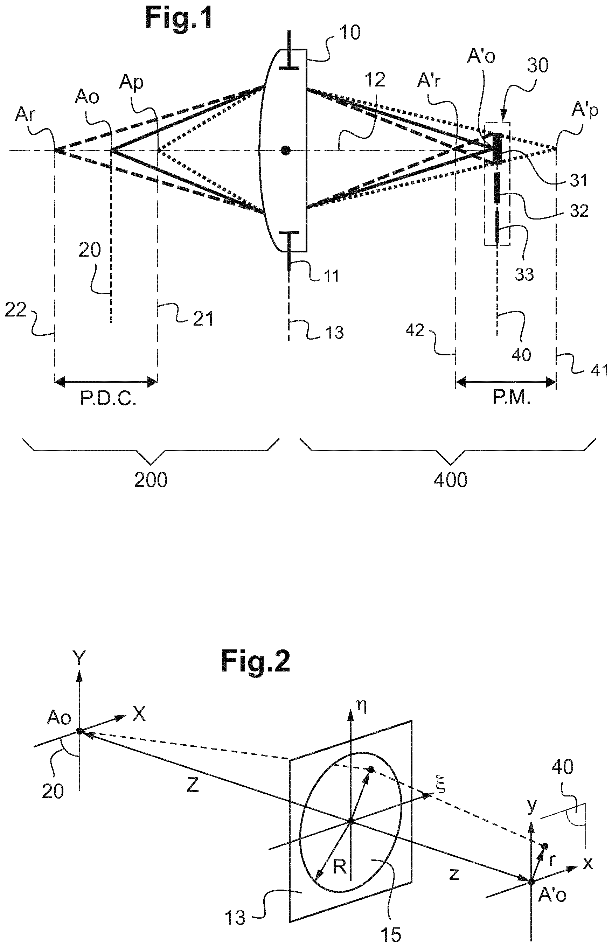

La Figure 1 représente schématiquement un système d'imagerie optique. Simplifié au minimum, ce système d'imagerie comporte un système optique 10 et un détecteur d'image 30. Dans l'exemple représenté, le système optique 10 est constitué d'une seule lentille symétrique de révolution autour d'un axe optique 12. Le système optique 10 peut comporter un assemblage de plusieurs lentilles ou d'autres composants optiques. Une pupille 11 délimite l'ouverture du système optique 10. En général le centre O de la pupille 11 est placé sur l'axe optique 12. Le détecteur d'image 30 comprend au moins un détecteur élémentaire 31, 32, 33. Par détecteur élémentaire, on entend ici un détecteur ayant un élément résolvant dans au moins une direction spatiale. Le détecteur d'image 30 est disposé dans un plan de détection 40, généralement transverse à l'axe optique 12. Une source de lumière (non représentée) éclaire un objet situé dans l'espace objet 200. Le système optique 10 forme une image de cet objet dans l'espace image 400. Plus précisément, le système optique 10 conjugue optiquement le plan de détection 40 avec un plan objet 20. On définit la profondeur de mise au point PM du système d'imagerie comme étant l'intervalle longitudinal de l'espace image 400 pour lequel un système de détection d'image 30 donné ne détecte pas ou peu de flou sur l'image détectée. On définit, dans l'espace objet 200, la profondeur de champ PDC du système d'imagerie à partir de la profondeur de mise au point PM en appliquant les relations usuelles de conjugaison optique. La profondeur de mise au point PM dépend des spécifications du système optique (focale, conjugaison optique objet-image, ouverture numérique), de la longueur d'onde $\lambda$ du faisceau optique et de l'extension spatiale de l'élément résolvant du détecteur d'image 30.

Schématiquement, on a représenté sur la figure 1 un système de détection 30 formé, par exemple d'une matrice planaire de détecteurs élémentaires 31, 32, 33, ou pixels (CCD ou CMOS), d'une barrette de pixel ou d'un détecteur unique (photodiode), de dimensions prédéterminées. Le pixel 31 est disposé dans le plan de détection 40, à l'intersection de l'axe optique 12. Le pixel 31 détecte l'image $A'_0$ d'un point $A_0$ situé à l'intersection de l'axe optique 12 et du plan de mise au point 20. Le système optique 10 conjugue optiquement le plan de mise au point 20 de l'espace objet avec le plan de détection 40 de l'espace image. Ainsi, le plan de détection 40 est un plan transverse à l'axe optique 12 et conjugué optiquement avec le plan objet 20. De manière analogue, un point Ap, respectivement Ar, situé dans un plan objet 21, respectivement 22, est conjugué optiquement avec un point A'p, respectivement A'r, situé dans un plan image 41, respectivement 42. Par définition, les points A'r et A'p correspondant aux extrémités de la zone axiale de profondeur de mise au point PM calculée géométriquement, la dimension transverse du faisceau optique formant l'image au point A'r et A'p a une taille égale à la taille du pixel 31, dans le plan de détection 40. Ainsi, le système de détection ne détecte pas de dégradation de la qualité image entre les plans objet 20, 21 et 22. La profondeur de champ PDC correspond géométriquement à la distance le long de l'axe optique 12, entre le plan objet 21 et le plan objet 22 pour lesquels l'image à travers le système optique 10 a la dimension transverse d'un pixel 33 du système de détection 30.

Une analyse géométrique simple montre que la profondeur de mise au point PM dépend de paramètres tels que notamment : l'ouverture numérique du système optique, la taille caractéristique du détecteur élémentaire et le grandissement du système optique.

Il existe différentes techniques pour augmenter la profondeur de champ d'un système optique d'imagerie. On connaît des filtres spatiaux de type apodiseur placés dans le plan de la pupille du système optique. Un filtre apodiseur est en général un filtre spatial en transmission ayant une distribution en amplitude qui permet de supprimer les anneaux secondaires de la figure de diffraction produite par un système optique en un point image.

Sur la figure 2, on a représenté les repères géométriques utilisés pour l'évaluation de l'amplitude de la réponse percussionnelle dans le champ image, au voisinage du plan de mise au point, d'un système optique possédant une fonction pupillaire donnée 15.

On considère un système d'imagerie comprenant un système optique de focale F formant l'image d'un point $A_0$ en un point image $A'_0$. Le système d'imagerie comporte en outre un filtre spatial ou masque optique. Ce masque optique est disposé au voisinage du plan de la pupille du système optique ou dans un plan optiquement conjugué avec le plan de la pupille du système optique. Le masque optique génère une fonction pupillaire complexe 15 susceptible de modifier la réponse percussionnelle en amplitude et en phase du système d'imagerie. Cette fonction pupillaire complexe 15 est notée $D(\xi, \eta)$, où $\xi, \eta$ sont les coordonnées cartésiennes dans le plan 13 de la pupille 11.

On définit ici un défaut de mise au point par le déphasage correspondant $\Psi(z, Z)$ de l'onde optique au bord de la pupille 13 par rapport au front d'onde du point conjugué $A'_0$. La pupille a une forme circulaire centrée sur l'axe optique 12 et de rayon maximum R. Par définition :

$$\Psi(z,Z) = \frac{\pi R^2}{\lambda}\left(\frac{1}{z} + \frac{1}{Z} - \frac{1}{F}\right)$$
$$= \frac{2\pi}{\lambda} w_{20}$$

où $w_{20}$ représente l'écart normal, exprimé en nombre de longueurs d'onde, par rapport à la sphère de référence en bord de pupille dû au défaut de mise au point. Dans l'approximation de Fresnel, l'expression de l'amplitude complexe du champ électromagnétique dans l'espace image est donnée par l'équation (2) :

$$U(Z,x,y,z)$$
$$\propto \frac{1}{\lambda^2 \cdot zZ} \cdot e^{i\frac{k\cdot(x^2+y^2)}{2z}} \cdot e^{i\frac{k\cdot(X^2+Y^2)}{2Z}} \times \iint_{pupille} D(\xi,\eta) \cdot e^{i\frac{k\cdot(\xi^2+\eta^2)}{2}\cdot\left(\frac{1}{Z}+\frac{1}{z}-\frac{1}{F}\right)}$$
$$\cdot e^{-ik\left[\left(\frac{X}{Z}+\frac{x}{z}\right)\cdot\xi+\left(\frac{Y}{Z}+\frac{y}{z}\right)\cdot\eta\right]} \cdot d\xi. d\eta$$

On cherche à déterminer un filtre spatial de type masque de phase permettant d'étendre la profondeur de mise au point ou, de manière équivalente, d'étendre la profondeur de champ d'un système d'imagerie. Exprimé mathématiquement, ce problème revient à définir dans le plan pupillaire un profil de phase $D(\zeta, \eta)$ tel que, pour un point objet donné, le champ optique au voisinage du point image conjugué présente une propriété d'invariance le long de l'axe optique:

$$\frac{\partial|U(x,y,z)|^2}{\partial z} = 0 \ \forall x, y \ pour \ tout \ z \in PM$$
$$(3)$$

En général, l'équation (3) ne possède pas de solution analytique.

Le problème énoncé ci-dessus peut être formulé de manière plus simple dans le cas d'un système optique à symétrie de révolution et pour un point objet A situé dans le champ du système. On introduit un système de coordonnées cylindriques et on note, dans le plan de la pupille $\rho$ le rayon réduit, défini par $\rho = \frac{\sqrt{\xi^2+\eta^2}}{R}$, avec $R$ le rayon maximum de la pupille.

L'équation (2) est ainsi reformulée :

$$U(Z,r,z) = \frac{2\pi R^2}{\lambda^2 \cdot zZ} e^{i\frac{k\cdot r^2}{2z}} \int_0^1 D(\rho). e^{i\Psi(z,Z)\cdot\rho^2} \cdot J_0\left(\frac{kR}{z}\cdot r\cdot\rho\right)\cdot\rho\cdot d\rho$$

L'intensité normalisée s'exprime sous la forme :

$$I(Z,r,z) = \frac{1}{I_0}\left|\int_0^1 D(\rho). e^{i\Psi(z,Z)\cdot\rho^2} \cdot J_0\left(\frac{kR}{z}\cdot r\cdot\rho\right)\cdot\rho\cdot d\rho\right|^2$$

où $I_0$ représente l'intensité sur l'axe limitée par la diffraction, dans le plan de détection du système d'imagerie sans filtre spatial en conjugaison infini-foyer.

Dans le cas d'un système optique non centré ou ayant une ouverture numérique telle que l'approximation de Fresnel ne s'applique pas, il existe d'autres modèles de répartition de l'intensité $I(Z, x, y, z)$ bien connus de l'homme du métier (voir, par exemple, la théorie ENZ : Extended Nijboer-Zernike).

La publication J. Ojeda-Castaneda et al., "Ambiguity Function as a Design Tool for high focal depth", Appl. Opt., Vol. 27, No. 4, 1988 décrit un filtre spatial de type apodiseur, qui modifie l'amplitude de la pupille pour modifier la réponse percussionnelle. Plus précisément, cette publication compare les performances de différents filtres apodiseurs permettant une stabilisation de la réponse pour un défaut de mise au point de l'ordre de $1\lambda$ qui correspond à $|\Psi| \le 6,28$. Ces filtres apodiseurs en amplitude ont pour principal inconvénient d'induire une atténuation de la luminosité du système d'imagerie et donc de réduire fortement l'efficacité photométrique du système d'imagerie.

Une autre publication décrit un masque de phase de profil polynomial qui permet de stabiliser la réponse percussionnelle (PSF) selon $\Psi$. La publication Cathey, E. Dowski, New Paradigm for Imaging System, Appl. Opt., Vol. 41,2002 propose, dans le cadre des approximations envisagées, un masque de phase ayant une distribution spatiale de phase polynomiale d'ordre 3 dans le plan de la pupille, ou masque de phase cubique, et introduisant un défaut d'amplitude supérieur à 20 radians, qui permet d'obtenir une gamme de défocalisation évaluée à $|\Psi| \le 30$, soit un gain en défocalisation d'un facteur 10. Néanmoins, de tels masques de phase cubique nécessitent une déconvolution de l'image détectée par la réponse percussionnelle (PSF) résultante. Ces résultats ont par la suite été étendus à des profils logarithmiques présentant des performances analogues.

Ce type de masque de phase présente un autre inconvénient. Bien que la réponse percussionnelle soit quasi-invariante dans sa forme, la position du barycentre de la réponse percussionnelle se décale le long de l'axe longitudinal. Ce décalage produit une distorsion significative de l'image qui ne peut pas être corrigée, y compris numériquement, car elle dépend de la position tridimensionnelle de chaque point objet. Enfin, ces masques sont généralement onéreux à produire, car ils doivent généralement être réalisés par usinage diamant.

La publication H. Wang et al., "High Focal Depth with a Pure-Phase Apodizer", Appl. Optics, Vol. 40, No. 31, 2001, propose un masque de phase constitué de trois anneaux concentriques présentant des sauts de phase binaires entre 0 et $\pi$. Ce masque de phase, de fabrication simple, ne produit pas de distorsion d'image. L'application de la théorie de la diffraction permet de calculer la distribution d'intensité le long de l'axe optique longitudinal du système optique, pour différentes valeurs des rayons normalisés a et b des deux anneaux internes. Par une approche d'essai et erreur, la détermination de valeurs optimisées de a et b permet d'uniformiser la distribution axiale d'intensité I(z, x=0, y=0) et d'étendre la profondeur de champ. Cependant, cette méthode ne permet pas d'évaluer la distribution d'intensité dans l'ensemble du champ image, et ne garantit donc pas des performances optimales en termes de résolution spatiale. Ce type de masque de phase trouve des applications en microscopie confocale à balayage de faisceau, où on forme une image point par point. Combiné à un post-traitement d'image, un tel masque permet d'étendre le défaut de mise au point à $|\Psi| \le 7,6$ soit un gain en défocalisation d'un facteur deux.

L'utilisation d'un tel masque de phase annulaire présente deux limitations : d'une part, la performance en termes d'extension de la profondeur de champ et/ou de profondeur de mise au point reste limitée, d'autre part, en imagerie, le critère d'invariance de l'intensité ne suffit pas pour obtenir une image de qualité sur tout le champ image. Enfin, l'étape de déconvolution nécessite une étape supplémentaire dans la chaîne de traitement de l'image.

Le document de brevet WO 2015/004659_A1 décrit un élément optique à deux masques de phase destiné à étendre la profondeur de mise au point (DOF) d'un système d'imagerie dans une gamme limitée en terme de defocus. Le document FR2919733_A1 décrit un système optique muni d'un autre dispositif d'accroissement de sa profondeur de champ. Enfin, la publication Yang et al. «Optimized phase pupil masks for extended depth of field», Optics Comm. Vol. 272, no 1, p. 56-66, 2007 décrit masque pupillaire de phase ayant un profil exponentiel pour étendre la profondeur de champ d'un système optique.

Par ailleurs, il existe aussi des méthodes numériques de traitement d'image pour permettre d'augmenter la résolution spatiale ou le contraste d'un système d'imagerie. Cependant, ces méthodes impliquent un post-traitement numérique qui est en général incompatible avec l'utilisation directe (sans déconvolution) du système d'imagerie. Ces méthodes présentent des performances limitées.

Il existe donc un besoin pour une méthode de conception de filtre spatial permettant de modifier (étendre ou réduire) la profondeur de champ et/ou la profondeur de mise au point d'un système d'imagerie tout en assurant une invariance de la qualité image sur cette profondeur de champ modifiée et/ou profondeur de mise au point modifiée. De préférence, le système d'imagerie permet d'obtenir une image sur la zone de profondeur de champ modifiée et/ou de profondeur de mise au point modifiée, sans post-traitement d'image.

En particulier, il est souhaitable de d'étendre la plage des défauts de mise au point tolérés pour un système d'imagerie existant, afin de faciliter la fabrication et les réglages de mise au point de ce système d'imagerie et d'étendre la profondeur de champ et/ou la profondeur de mise au point de ce système d'imagerie sans introduire de distorsion ou de dégradation de la qualité image.

Plus précisément, il est souhaitable d'étendre la profondeur de champ d'un système d'imagerie sans post traitement d'image pour obtenir une extension de profondeur de champ au moins aussi grande que dans les systèmes antérieurs nécessitant un post-traitement. De plus, il est souhaitable d'étendre considérablement la profondeur de champ d'un système d'imagerie combinant un filtre spatial et un post traitement par comparaison avec les résultats obtenus dans les systèmes de l'art antérieur.

Il existe aussi un besoin pour un filtre spatial destiné à être combiné avec un système d'imagerie, le filtre spatial étant de fabrication aisée, qui permette de modifier la profondeur de champ et/ou de mise au point du système d'imagerie, sans dégradation de la qualité image le long de l'axe optique longitudinal du système optique.

OBJET DE L'INVENTION

L'invention est définie dans les revendications.

Afin de remédier à l'inconvénient précité de l'état de la technique, la présente invention propose un procédé de conception d'un système d'imagerie comprenant un système optique ayant un axe optique longitudinal, un détecteur d'image et un filtre spatial, le système d'imagerie étant configuré pour former une image d'un plan de mise au point sur le détecteur d'image, le procédé comprenant les étapes suivantes:

a) Initialisation d'une position longitudinale du plan de mise au point et d'une position longitudinale du détecteur d'image, le système optique conjuguant optiquement la position longitudinale du plan de mise au point et la position longitudinale du détecteur d'image (30) sur l'axe optique longitudinal ;

b) initialisation d'une fonction pupillaire de phase du filtre spatial dans le plan pupillaire du système optique,

c) calcul d'une fonction de transfert optique du système optique combiné avec le filtre spatial, en fonction, d'une part, de la fréquence spatiale et, d'autre part, du défaut de mise au point ;

d) détermination d'une carte de contraste et d'une carte de phase, la carte de contraste étant égale au module de la fonction de transfert optique en fonction, d'une part, de la fréquence spatiale, et, d'autre part, du défaut de mise au point, et la carte de phase étant égale à l'argument de la fonction de transfert optique en fonction, d'une part, de la fréquence spatiale, et, d'autre part, du défaut de mise au point ;

e) détermination, à partir de la carte de contraste et de la carte de phase obtenues à l'étape d), d'un domaine de profondeur de mise au point du système d'imagerie dans la gamme utile de fréquences spatiales et calcul d'une valeur d'extension longitudinale dudit domaine de profondeur de mise au point;

f) évaluation d'une fonction de mérite de ladite fonction pupillaire de phase du filtre spatial en fonction de la valeur d'extension longitudinale du domaine de profondeur de mise au point du système d'imagerie dans la gamme utile de fréquences spatiales;

g) réitération des étapes b) à f) pour une autre fonction pupillaire de phase du filtre spatial ;

h) sélection, à partir d'une pluralité d'évaluations de la fonction de mérite correspondant respectivement à une pluralité de fonctions pupillaires de phase du filtre spatial, d'une fonction de phase pupillaire déterminée permettant au système d'imagerie de présenter une valeur déterminée d'extension longitudinale du domaine de profondeur de mise au point dans la gamme utile de fréquences spatiales.

L'étape d) comprend les étapes suivantes:

i) initialisation d'un seuil de contraste, d'un seuil de déphasage et d'un seuil de variation moyenne du contraste ;

j) détermination, à partir de la carte de contraste calculée à l'étape d) d'un premier domaine de profondeur de mise au point, pour lequel la valeur du contraste est supérieure ou égale au seuil de contraste dans la gamme utile de fréquences spatiales;

k) détermination, à partir de la carte de phase calculée à l'étape d) d'un deuxième domaine de profondeur de mise au point, pour lequel la phase est inférieure ou égale au seuil de déphasage dans la gamme utile de fréquences spatiales ;

l) détermination d'un troisième domaine de profondeur de mise au point, pour lequel la variation moyenne de contraste moyenné dans la gamme utile de fréquences spatiales est inférieure ou égale au seuil de variation moyenne du contraste. Plus particulièrement l'étape e) comprend l'étape suivante :

m) détermination du domaine de profondeur de mise au point par intersection du premier domaine de profondeur de mise au point avec le deuxième domaine de profondeur de mise au point et avec le troisième domaine de profondeur de mise au point, et

dans lequel l'étape f) comprend l'étape suivante :

n) calcul, en fonction du défaut de mise au point, du contraste moyen du système d'imagerie moyenné dans la gamme utile de fréquences spatiales et pour ledit domaine de profondeur de mise au point déterminé à l'étape m);

o) évaluation d'une fonction de mérite représentative de ladite fonction pupillaire de phase du filtre spatial la fonction de mérite étant fonction, d'une part, de la valeur d'extension longitudinale du domaine de profondeur de mise au point du système d'imagerie déterminée à l'étape m) et, d'autre part, du contraste moyen calculé à l'étape n) dans la gamme utile de fréquences spatiales.

D'autres caractéristiques non limitatives et avantageuses du procédé de conception d'un système d'imagerie comprenant un filtre spatial conforme à l'invention, prises individuellement ou selon toutes les combinaisons techniquement possibles, sont les suivantes :

- la pupille est de forme circulaire centrée sur l'axe optique et la fonction pupillaire de phase du filtre spatial est symétrique de révolution autour de l'axe optique ou à symétrie de révolution partielle, la fonction pupillaire de phase du filtre spatial étant décomposée en secteurs angulaires ;
- la fonction pupillaire de phase du filtre spatial comporte une série de valeurs de phases discrètes ;
- la fonction pupillaire de phase du filtre spatial comporte des valeurs de phases binaires ;
- la fonction pupillaire de phase du filtre spatial est une fonction polynomiale de la distance radiale par rapport au centre de la pupille ;
- la pupille du système optique est asymétrique autour de l'axe optique et la carte de contraste comporte une carte réelle et une carte imaginaire ;
- l'étape g) d'évaluation d'une fonction de mérite comporte une étape de calcul du produit de la valeur d'extension longitudinale du domaine de profondeur de mise au point par le contraste moyen affecté d'un coefficient de puissance numérique, ce coefficient de puissance numérique étant un nombre réel ;
- le procédé comporte une étape de détermination d'une valeur d'extension longitudinale du domaine de profondeur de champ en fonction de la valeur d'extension longitudinale du domaine de profondeur de mise au point.

L'invention propose également un filtre spatial pour un système d'imagerie suivant la revendication 10.

L'invention propose également un système d'imagerie suivant la revendication 11.

Plus particulièrement, selon l'invention le filtre spatial forme, dans le plan pupillaire, un masque de phase ayant une fonction pupillaire de phase, ladite fonction pupillaire de phase étant déterminée suivant le procédé de l'invention de manière à ce que le système optique combiné au filtre spatial présente un domaine de profondeur de mise au point déterminé sur une gamme utile de fréquences spatiales ayant une valeur d'extension longitudinale, telle que calculée à l'étape e) ci-dessus, supérieure, respectivement inférieure, d'un facteur multiplicateur, respectivement diviseur, au moins égal à 10, à la profondeur de mise au point calculée géométriquement dudit système d'imagerie dépourvu dudit filtre spatial.

Selon un aspect particulier et avantageux, le système d'imagerie comporte en outre un système d'acquisition d'image adapté pour acquérir une image numérique détectée par le détecteur d'image et un système de traitement d'image configuré pour appliquer un post-traitement numérique à l'image numérique acquise par le système d'acquisition d'image, le post-traitement numérique étant fonction du filtre spatial associé à ladite valeur d'extension longitudinale du domaine de profondeur de mise au point et au contraste moyen.

Selon un mode de réalisation particulier et avantageux, le système d'imagerie comporte un modulateur spatial de phase, le modulateur spatial de phase étant configuré pour former ledit filtre spatial et ledit modulateur spatial de phase étant modulable dynamiquement.

DESCRIPTION DETAILLEE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés:

- la figure 1 représente une vue en coupe longitudinale d'un système d'imagerie de l'art antérieur, sans masque de phase, ce système d'imagerie définissant une profondeur de mise au point et une profondeur de champ ;
- la figure 2 représente schématiquement les repères géométriques utilisés pour l'évaluation de la réponse percussionnelle d'un système d'imagerie ayant une fonction pupillaire ;
- la figure 3 représente un exemple de répartition longitudinale d'intensité en fonction de la distance radiale à l'axe optique et en fonction du défaut de mise au point, au voisinage du plan de mise au point ;
- la figure 4A représente un exemple de carte de contraste en fonction de la fréquence spatiale et du défaut de mise au point, pour un système d'imagerie sans masque de phase ; la figure 4B représente un exemple de carte de phase dans le plan image correspondant au même système d'imagerie sans masque de phase ;
- les figures 5A-5R représentent des images de mire de Siemens acquises au moyen du système d'imagerie sans masque de phase dont la carte de contraste est représentée sur la figure 4A et la carte de phase sur la figure 4B ;
- la figure 6 représente un cliché d'un premier exemple de masque de phase selon un mode de réalisation de l'invention ;
- la figure 7 représente schématiquement le profil radial de phase du masque de phase de la figure 6 ;
- la figure 8A représente la carte de contraste en fonction de la fréquence spatiale et du défaut de mise au point pour un système d'imagerie comprenant le masque de phase représenté sur les figures 6 et 7 ; la figure 8B représente une courbe de profil longitudinal de contraste moyenné dans la gamme utile de fréquences spatiales en fonction du défaut de mise au point;

- les figures 9A-9R représentent des images de mire de Siemens acquises au moyen du système d'imagerie comprenant le masque de phase représenté sur les figures 6 et 7, ces images étant obtenues sans post-traitement ;
- les figures 10A-10R représentent des images de mire de Siemens acquises expérimentalement au moyen du système d'imagerie comprenant le masque de phase représenté sur les figures 6 et 7, ces images étant obtenues avec post-traitement numérique ;
- la figure 11 représente schématiquement un deuxième exemple de profil radial de masque de phase selon une variante d'un mode de réalisation de l'invention ;
- les figures 12A-12R représentent des images de mire de Siemens acquises au moyen du système d'imagerie comprenant le masque de phase dont le profil radial de phase est représenté sur la figure 11, ces images étant obtenues avec post-traitement numérique.

Procédé

La présente divulgation propose un procédé pour concevoir un système d'imagerie optique comprenant un masque pupillaire de phase permettant de modifier la profondeur de champ du système d'imagerie optique tout en assurant l'invariance de la qualité image sur cette profondeur de champ modifiée. Selon les applications, ce procédé peut être mis en œuvre pour étendre ou réduire la profondeur de champ d'un système d'imagerie optique.

Dans la suite de la présente divulgation, on considère un système d'imagerie comprenant un système optique, un détecteur d'image disposé dans un plan de détection et éventuellement un filtre spatial de type masque de phase disposé dans le plan de la pupille du système optique ou dans un plan optiquement conjugué. Le système d'imagerie est configuré pour former une image d'un plan mise au point 20 dans le plan de détection 40.

Les performances du système d'imagerie (avec ou sans masque de phase) sont évaluées au moyen d'une carte de contraste qui représente les variations du contraste non seulement en fonction du défaut de mise au point sur l'axe, mais aussi en fonction de la fréquence spatiale. Le masque de phase est ainsi représenté comme un opérateur de carte de contraste du système d'imagerie et on utilise la méthode décrite ci-après pour le calculer.

On estime l'évolution de la fonction de transfert optique (FTO) du système optique éventuellement combiné au masque de phase pupillaire selon le défaut de mise au point. La FTO peut être évaluée par autocorrélation de la fonction pupillaire pour différentes valeurs du défaut de mise au point. Dans le cas d'un système optique à symétrie de révolution, la FTO peut par exemple se déduire directement de la répartition de l'intensité sur l'axe $I(Z,r,z)$ par l'équation :

$$FTO(Z,f,z) = 2 \cdot TF \circ TA(I(Z,r,z)) \qquad (2.3)$$

Où $TF$ représente la transformée de Fourier et $TA$ représente l'opérateur d'Abel :

$$TA\big(f(r)\big) = \int_x^\infty f(r) \cdot \frac{r}{(r^2 - x^2)} dr = g(x)$$

La FTO est généralement complexe. Dans la suite de la présente divulgation, nous nommons carte de contraste le module de la fonction de transfert optique (FTO) et carte de phase son argument.

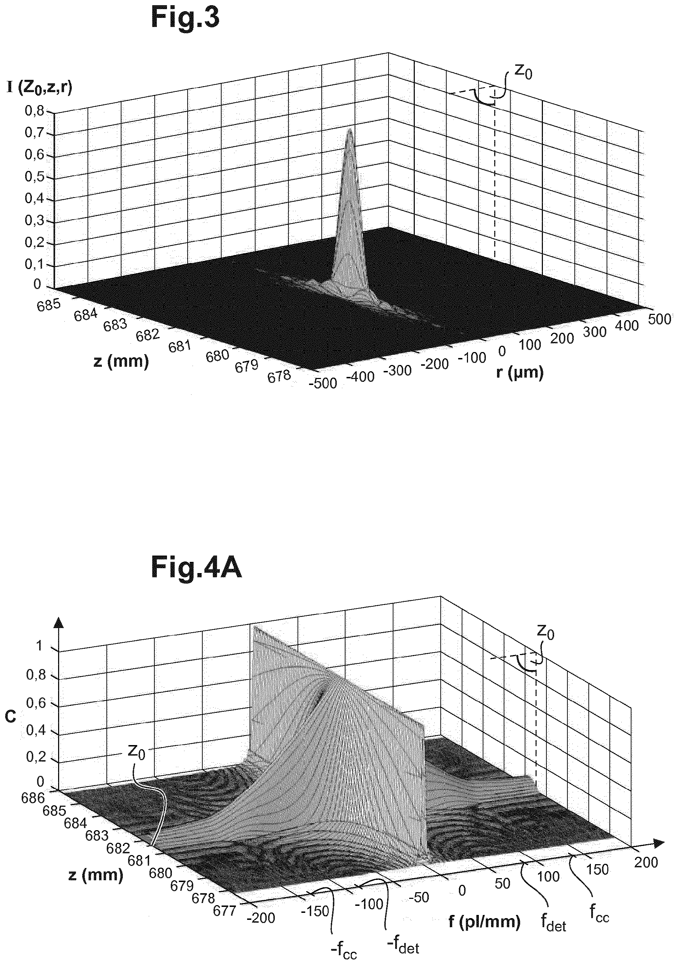

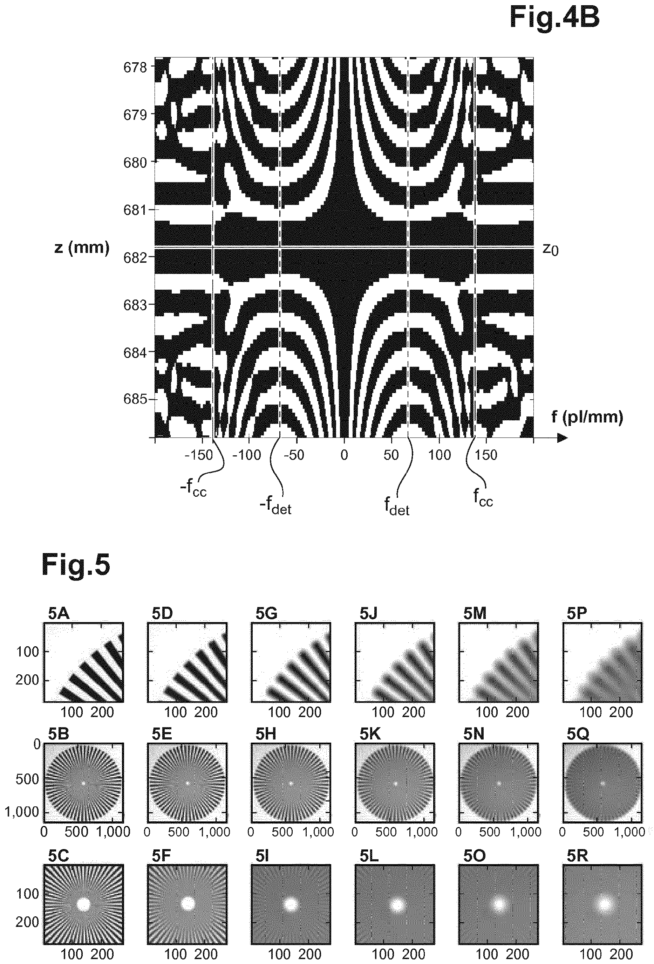

A titre d'exemple, on considère un système d'imagerie de référence, tel que représenté sur la figure 1, comprenant une lentille 10 de focale $F = 600mm$., ayant une pupille circulaire de diamètre R=25 mm, sans masque de phase, formant l'image d'un objet situé à une distance de $Z_0 = 5m$ dans le plan de détection situé à la position $z_0 \approx 681,81$ mm. La figure 4A représente une carte de contraste de ce système d'imagerie de référence en fonction de la fréquence spatiale $f$ et en fonction du défaut de mise au point z, au voisinage du plan de mise au point ($z_0 \approx 681,81$ mm). Sur les figures 4A et 4B, on a représenté les fréquences spatiales (-$f_{det}$, $f_{det}$) correspondant à la résolution spatiale du détecteur d'image, et, respectivement, les fréquences spatiales de coupure (-$f_{cc}$, $f_{cc}$) correspondant à la limite théorique de diffraction du système optique à la longueur d'onde d'utilisation. On a représenté le plan de détection z=$z_0$. On observe sur la carte de contraste (Fig. 4A) que la valeur du contraste décroit fortement pour les fréquences spatiales utiles dès qu'on s'éloigne du plan de mise au point.

La figure 4B représente une carte de phase correspondant au même système d'imagerie de référence en fonction d'une part de la fréquence spatiale f et d'autre part du défaut de mise au point. Le trait horizontal correspond au plan de détection z=$z_0$. Sur cette carte de phase, les zones noires correspondent à une phase nulle, c'est-à-dire à un contraste positif, et les zones blanches à une phase égale à $\pi$, c'est-à-dire à une inversion de contraste. Sur cette carte de phase, on observe que la phase de la FTO reste constante (phase nulle) au proche voisinage du plan de détection ($z=z_0$) en fonction de la fréquence spatiale, notamment dans la gamme utile de fréquences spatiales ici [$-f_{det}$, $f_{det}$]. Pour une fréquence spatiale nulle, la phase du contraste reste aussi constante (phase nulle) le long de l'axe optique dans la gamme de défaut de mise au point représentée. Toutefois, la phase du contraste de la figure 4B varie fortement dès qu'on s'éloigne du plan de détection dans la gamme utile de fréquences spatiales. Cette carte de la phase explique les inversions de contraste apparaissant à certaines fréquences spatiales en fonction du défaut de mise au point.

La carte de contraste (Fig. 4A) et la carte de phase (Fig. 4B) illustrent bien le fait que la qualité image du système d'imagerie sans masque de phase se dégrade très rapidement dès qu'on s'éloigne du plan de mise au point 40.

Cette nouvelle approche permet une meilleure évaluation des performances d'un système d'imagerie en fonction du défaut de mise au point.

La figure 5 représente une série d'acquisitions expérimentales d'une mire de Siemens réalisées avec le système d'imagerie de référence pour différentes valeurs de défaut de mise au point. Les axes horizontaux et verticaux représentent le nombre de pixels dans le plan du détecteur d'image, ici composé d'environ 1100x1100 pixels.

Les figures 5B, 5C, 5H, 5I, 5N, 5Q représentent l'image complète de la mire de Siemens et montrent toutes les fréquences spatiales. Les figures 5A, 5B, 5C illustrent des images d'une mire de Siemens disposée dans le plan de mise au point, pour un défaut de mise au point $|\Psi| = 0$. Les figures 5D, 5E, 5F illustrent des images de la même mire de Siemens pour un défaut de mise au point $|\Psi| = \pm7.9$. Les figures 5G, 5H, 5I illustrent des images de la même mire de Siemens pour un défaut de mise au point $|\Psi| = \pm15.8$. Les figures 5J, 5K, 5L illustrent des images de la même mire de Siemens pour un défaut de mise au point $|\Psi| = \pm23.7$. Les figures 5M, 5N, 5O illustrent des images de la même mire de Siemens pour un défaut de mise au point $|\Psi| = \pm31.6$. Les figures 5P, 5Q, 5R illustrent des images de mire de Siemens pour un défaut de mise au point $|\Psi| = \pm39.4$.

Les figures 5A, 5D, 5G, 5J, 5M, 5P représentent un zoom sur une zone excentrée de 250x250 pixels dans l'image de la mire de Siemens, correspondant aux fréquences spatiales les plus basses. Les figures 5C, 5F, 5I, 5L, 5O, 5R représentent un zoom sur une zone centrale de 250x250 pixels dans l'image de la mire de Siemens, correspondant aux fréquences spatiales les plus élevées.

On observe visuellement sur ces images la baisse du contraste en fonction du défaut de mise au point en passant de l'image 5A ($|\Psi| = 0$) à l'image 5P ($|\Psi| = \pm39.4$), cette baisse étant plus accentuée au centre de la mire (image 5R), c'est à dire aux fréquences spatiales élevées. On observe aussi visuellement sur ces images des inversions de contraste se produisant en fonction du défaut de mise au point et en fonction des fréquences spatiales.

Le problème technique de modification de la profondeur de champ ou de la profondeur de mise au point d'un système d'imagerie au moyen d'un masque de phase disposé dans le plan de la pupille ou dans un plan optiquement conjugué avec la pupille du système d'imagerie, peut être reformulé au moyen de cette carte de contraste, éventuellement combinée à la carte de phase. Etendre la profondeur de mise au point d'un système d'imagerie revient à rendre invariante les cartes de contraste et de phase le long de l'axe longitudinal (z) de part et d'autre de la ligne $z=z_0$ et dans la gamme utile de fréquences spatiales du système d'imagerie. La gamme utile de fréquences spatiales [-fc ; fc] du système d'imagerie considéré est un paramètre d'entrée fixé selon les besoins, elle peut notamment être déterminée en fonction de la fréquence spatiale de coupure du détecteur d'image $f_{det}$. De préférence, il est souhaitable d'éviter les inversions de phase sur la profondeur de champ (ou sur la profondeur de mise au point) et sur le domaine utile de fréquences spatiales.

D'une façon générale, pour mener à bien la conception d'un masque de phase pour un système d'imagerie, il convient de définir des grandeurs d'entrée, permettant de spécifier les propriétés recherchées pour le système d'imagerie optique, et des grandeurs de sortie, pour évaluer les résultats obtenus selon une fonction de mérite.

Pour agir spécifiquement sur la profondeur de champ ou sur la profondeur de mise au point du système d'imagerie optique, ces grandeurs sont définies de la manière suivante.

1) Grandeurs d'entrée

Pour évaluer la performance de différents masques de phase pupillaires au sens de la fonction de transfert optique (FTO), nous introduisons des paramètres d'entrée, représentant des critères.

• première condition sur la borne inférieure du contraste ($C_0$)

On définit une valeur d'un seuil de contraste minimal $C_0$ désiré en tout point de la carte de contraste de la FTO, pour une gamme utile de fréquences spatiales [-fc;fc] déterminée.

• deuxième condition sur la valeur de déphasage maximal ($\Phi_0$) de la FTO

On définit une valeur d'un seuil de déphasage $\Phi_0$ limitant les déphasages autorisés sur la carte de phase de la FTO dans la gamme utile de fréquences spatiales [-fc; fc].

Par exemple, si on fixe $\Phi_0$ égal à 0 rad., aucun déphasage n'est autorisé sur la FTO dans la gamme utile de fréquences spatiales [-fc; fc] déterminée. Si on fixe $\Phi_0$ égal à 2*pi rad., tout déphasage est autorisé sur la FTO, en particulier les inversions de contraste, dans la gamme utile de fréquences spatiales [-fc; fc] déterminée.

• troisième condition sur la variation moyenne du contraste ($S_0$)

On définit une valeur d'un seuil $S_0$ limitant les variations longitudinales du contraste moyenné dans la gamme utile de fréquences spatiales [-fc; fc].

Par exemple, si on fixe $S_0$ égal à 35%, le contraste moyen de la carte de contraste ne doit pas fluctuer de plus de 35% dans la gamme utile de fréquences spatiales [-fc; fc] déterminée.

2) Grandeurs de sortie

Afin de pouvoir comparer les performances de différents masques de phase pupillaires dans un système d'imagerie, on définit deux critères en fonction de la gamme utile de fréquences spatiales [-fc; fc] déterminée, et en fonction des valeurs des seuils ($C_0$, $\Phi_0$, $S_0$) choisis:

• Valeur de l'extension longitudinale du domaine de profondeur de mise au point ($|P|$)

Le domaine de profondeur de mise au point P est ici défini par l'intersection de plusieurs domaines, eux-mêmes définis à partir des conditions fixées par $C_0$, $\Phi_0$ et $S_0$. Plus précisément, l'extension longitudinale $|P|$ du domaine de profondeur de mise au point P est égale à la valeur absolue du domaine de profondeur de mise au point P, d'où :
$|P| = |Pc \cap Ps \cap P\varphi|$ avec Pc , Ps et P$\varphi$ définis comme suit.

o Pc est définie comme la plus grande zone longitudinale pour laquelle la première condition définie par $C_0$ est remplie sur la carte de contraste dans toute la gamme utile de fréquences spatiales [-fc; fc]. On peut interpréter Pc comme une mesure d'un premier domaine de profondeur de mise au point sur un critère de maintien d'une résolution minimale longitudinalement, plus ou moins importante selon la valeur retenue pour la borne $C_0$. Dans le cas où $C_0$ est nul $|P| = |Ps \cap P\varphi|$.

◦ P$\varphi$ est définie comme la plus grande zone longitudinale pour laquelle la deuxième condition définie par $\Phi_0$ est remplie sur la carte de phase. On peut interpréter P$\varphi$ comme une mesure d'un deuxième domaine de profondeur de mise au point sur un critère optionnel de limitation des déphasages de la FTO sur une zone longitudinale de la carte de phase et dans la gamme utile de fréquences spatiales [-fc; fc]. Dans le cas où $\Phi_0$ vaut 2*pi, P$\varphi$ est considéré comme infini ou non limitant, dans ce cas $|P| = |Pc \cap Ps|$.

◦ Ps est définie comme la plus grande zone longitudinale pour laquelle la condition $S_0$ est remplie sur la carte de contraste ; en cas de discontinuité, la plus grande extension satisfaisant au critère est retenue. On peut interpréter Ps comme une mesure d'un troisième domaine de profondeur de mise au point sur un critère de maintien longitudinal d'une forme de réponse percussionnelle (PSF), plus ou moins strict selon la valeur du seuil $S_0$ défini. Dans le cas où $S_0$ est nul, aucune variation de contraste n'est autorisée. Dans le cas où $S_0$ est égal à 100%, toute variation de contraste est autorisée et $P_s$ est considéré comme infini ou non limitant, dans ce cas : $|P| = |P_c \cap P_\varphi|$.

• Contraste moyen ($\overline{C}$)

$$\overline{C} = \langle |FTO| \rangle_{z \in z\_(P)\ et\ f \in [-f\_c,\ f\_c]}$$

$\overline{C}$ représente le contraste moyen du système d'imagerie sur la zone de la carte de contraste correspondant au domaine de profondeur de mise au point P. On peut interpréter $\overline{C}$ comme un indicateur de la qualité image du système d'imagerie sur le domaine de profondeur de mise au point P associé.

Par exemple, considérons le système d'imagerie de référence constitué d'un système optique sans masque de phase dont la carte de contraste est représentée sur la figure 4A.

Pour les valeurs de $C_0 = 1\%$, $\Phi_0 = 0$ rad. et $S_0 = 35\%$, nous obtenons $|P| = |Ps| = 0{,}55$ mm et $\overline{C} = 74\%$ pour une gamme utile de fréquences spatiales [-fc ; fc] déterminée par $f_c = f_{det} = 67$ (paires de lignes par millimètre ou pl/mm).

3) Exemple de calcul

$C_0$, $\Phi_0$ et $S_0$ sont des paramètres permettant au concepteur de choisir les caractéristiques du système d'imagerie voulu, respectivement la qualité de la fonction de transfert de modulation FTM et/ou l'invariance de celle-ci.

Dans un premier exemple d'application, on choisit une valeur de 1 % pour le seuil de contraste minimal $C_0$, une valeur de $\Phi_0$ égale à 0 rad. (autrement dit, les inversions de contraste ne sont pas autorisées) et une valeur de 35% pour le seuil de variation de contraste $S_0$.

Dans un deuxième exemple d'application, on privilégie le seuil de variation de contraste $S_0$ par rapport à la condition sur le premier seuil de contraste minimal $C_0=0\%$. Cela revient à privilégier un système d'imagerie présentant une extension longitudinale du domaine de profondeur de mise au point pouvant être importante, mais au possible détriment de la résolution spatiale. Un tel système d'imagerie (ayant une qualité image relativement moins bonne) peut nécessiter un post-traitement par déconvolution de l'image détectée.

Dans un autre exemple, on peut choisir borne inférieure de contraste $C_0$ élevée. Ce choix revient à privilégier la résolution spatiale par rapport à l'extension longitudinale du domaine de profondeur de mise au point. Un tel système d'imagerie est susceptible de fournir une image de bonne qualité sans nécessiter de déconvolution de l'image détectée.

Les paramètres $C_0$, $\Phi_0$ et $S_0$ permettent de déterminer les grandeurs de sortie ($|P|$ et $\overline{C}$) qui quantifient la réponse du système d'imagerie, en fonction du défaut de mise au point et en fonction de la gamme utile de fréquences spatiales [-fc ;fc].

Le concepteur fixe la valeur de $f_c$, puis choisit les valeurs d'entrée des paramètres $C_0$, $\Phi_0$ et $S_0$. Toutefois, pour un système d'imagerie donné, il n'y a pas unicité de la solution d'un masque de phase permettant de remplir les conditions imposées pour un même ensemble de valeurs $C_0$, $\Phi_0$ et $S_0$. La sélection d'un masque de phase pertinent résulte d'un processus d'optimisation et de l'évaluation d'une fonction de mérite associée au processus d'optimisation.

Différents systèmes d'imagerie basés sur la combinaison d'un même système optique et d'un même détecteur d'image, dans une conjugaison optique déterminée, avec différents masques de phase pupillaires sont simulés. Ces différents systèmes d'imagerie peuvent être évalués par un procédé d'optimisation ou de minimisation, en fonction des deux paramètres suivants : d'une part, une mesure de l'extension longitudinale du domaine de profondeur de mise au point correspondant à $|P|$ et, d'autre part, une mesure de la qualité image moyenne correspondant à $\overline{C}$, obtenue par le système d'imagerie muni de son masque de phase pupillaire.

Un algorithme d'optimisation permet de chercher le ou les profils de masque de phase pupillaire (ou de transmission) $D(\xi, \eta)$ dans l'équation 2.1, permettant de modifier, par exemple d'augmenter, la valeur d'extension longitudinale du domaine de profondeur de mise au point $|P|$ et/ou le contraste moyen $\overline{C}$. Ce calcul peut mettre en œuvre une optimisation non linéaire classique (de type Gauss-Newton, ou Levenberg-Marquardt par exemple) ou encore un algorithme de type génétique (NDS, Rang, Tournoi, Roulette biaisée ou autre).

L'utilisation d'un algorithme d'optimisation est en général basée sur un calcul d'une fonction de mérite à partir de la valeur d'extension longitudinale du domaine de profondeur de mise au point $|P|$ et/ou du contraste moyen $\overline{C}$.

Le procédé proposé peut, par exemple, permettre de stabiliser la réponse du système pour des défauts de mise au point très importants, tout en préservant la résolution spatiale du système.

Il est aussi possible d'obtenir de fortes extensions du domaine de profondeur de champ ou de profondeur de mise au point tout en conservant une résolution spatiale très acceptable sans post-traitement.

De manière analogue, le procédé peut être utilisé pour réduire fortement la valeur d'extension longitudinale du domaine de profondeur de mise au point ou de profondeur de champ d'un système d'imagerie, par exemple dans une application de microscopie résolue suivant l'axe longitudinal.

Le procédé est applicable à la définition de tout type de famille de masques de phase :

- masque de phase à symétrie de révolution, présentant un profil radial comprenant des sauts de phase binaires ou quantifiés, ou un profil radial polynomial ;
- masque de phase à symétrie de révolution partielle dont le profil peut être décomposé en secteurs angulaires de dimensions variables, chaque secteur angulaire présentant un profil radial comprenant des sauts de phase binaires ou quantifiés ou un profil radial polynomial.

Une fois inséré dans le système optique pour lequel il a été conçu, le masque de phase pupillaire (ou masque de phase) conçu par le procédé confère une profondeur de champ modifiée ou une profondeur de mise au point modifiée, en fonction des valeurs imposées par le concepteur pour les paramètres d'entrée ($C_0$, $\Phi_0$, $S_0$).

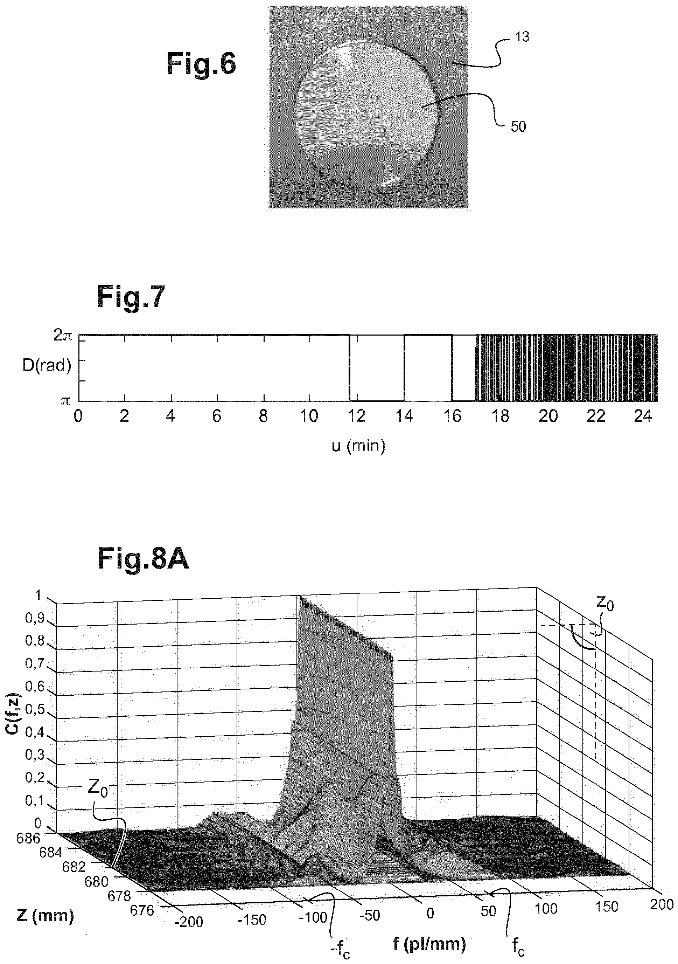

Dans un premier exemple d'application (Fig. 6-9), le couplage d'un masque de phase pupillaire dérivant du procédé décrit ci-dessus permet d'étendre le domaine de profondeur de champ d'un système d'imagerie pour atteindre un défaut de mise au point $|\Psi| \sim 40$ *rad.* sans distorsion de l'image détectée et avec une conservation des fréquences spatiales telle qu'un post-traitement n'est pas obligatoire pour obtenir une image exploitable. La profondeur de mise au point du système d'imagerie est ainsi immédiatement modifiée par l'insertion de ce masque de phase pupillaire.

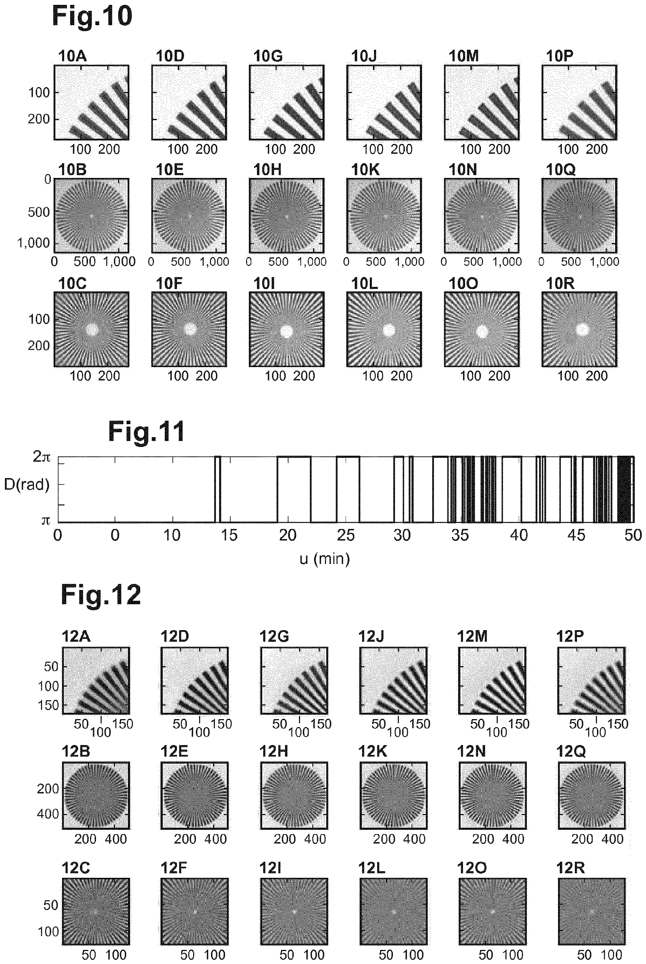

Dans un autre exemple d'application (Fig. 11-12), un autre masque de phase pupillaire permet d'étendre le domaine de profondeur de champ de manière considérable pour atteindre un défaut de mise au point | $\Psi$|~90 *rad.* sans distorsion de l'image. Toutefois, dans ce cas, un post-traitement d'image peut être souhaitable pour obtenir une image présentant les caractéristiques de résolution souhaitée. La profondeur de mise au point du système d'imagerie est donc ici aussi immédiatement modifiée par l'insertion de cet autre masque de phase pupillaire.

Le masque de phase pupillaire peut être conçu pour être placé à proximité du plan pupillaire du système optique ou dans un plan conjugué de celui-ci par un autre système optique.

Le procédé peut s'appliquer à tous types de systèmes d'imagerie. Il intègre en entrée les critères souhaités sur le système d'imagerie et prend en compte les paramètres du système à optimiser : ouverture numérique, focale, distance de mise au point, longueur d'onde ou gamme spectrale du faisceau optique d'imagerie.

Dans le premier exemple d'application, on recherche une augmentation de la profondeur de mise au point d'un système d'imagerie, ne nécessitant pas obligatoirement de post-traitement de l'image acquise.

A titre d'exemple illustratif et nullement limitatif, on calcule une fonction de mérite de la forme $m(C,P) = \overline{C} \cdot |P|^{\gamma}$: où |P| représente pour chaque système d'imagerie la valeur de l'extension longitudinale du domaine de profondeur de mise au point, c'est-à-dire de la zone longitudinale où le critère d'invariance est respecté. Expérimentalement, le facteur de puissance $\gamma$ est un nombre réel. Cette fonction de mérite peut être implémentée dans un algorithme d'optimisation qui peut être, par exemple, un algorithme génétique. D'autres algorithmes d'optimisation connus de l'homme du métier peuvent être utilisés tels qu'un algorithme d'optimisation multi-critères.

• Premier exemple d'application

On détaille ici un premier exemple de réalisation concernant un système d'imagerie comprenant un système optique formé d'un doublet ayant une focale de 600 mm. Ce système optique est diaphragmé pour fonctionner à l'ouverture F/12, avec un rayon R de la pupille égal à 25 mm. Les images sont réalisées à la longueur d'onde $\lambda$ = 532 nm. Le détecteur d'image est une matrice de 2048 x 2048 pixels, la taille d'un pixel élémentaire étant un carré de 7,4 microns de côté. Le système d'imagerie est en conjugaison 5m-681,81 mm, le détecteur d'image étant situé dans le plan image du doublet. Le masque de phase pupillaire est disposé contre l'un des dioptres du système optique, proche de son plan pupillaire. La fréquence de coupure retenue est $f_c$ = 45 pl/mm (paires de lignes par mm).

On choisit des valeurs de paramètres suivants : $C_0$ = 1 %, $\Phi_0$ = 0 rad et $S_0$ = 35 % sur la gamme utile de fréquences spatiales [-fc ; fc] du système d'imagerie.

On choisit un algorithme d'optimisation de type génétique, basé sur une fonction de mérite $m(\overline{C}, P) = \overline{C} \cdot P^{\gamma}$ avec une valeur $\gamma$ = 1,6.

On part d'une banque de profils prédéfinis et on détermine pour chaque profil prédéterminé la valeur de la fonction de mérite associée.

Au cours de l'exécution de l'algorithme d'optimisation, une augmentation de |P| signifie que la valeur d'extension longitudinale du domaine de profondeur de mise au point du système d'imagerie augmente, et/ou une augmentation du contraste moyen $\overline{C}$ signifie que la qualité image augmente dans ce domaine de profondeur de mise au point et dans la gamme utile de fréquences spatiales.

On détermine ainsi un premier masque de phase (Figure 6) ayant un profil à symétrie de révolution autour de l'axe optique du système optique, présentant des anneaux à sauts de phases binaires entre $\pi$ et $2\pi$. Le profil de phase du masque de phase utilisé est représenté en coupe sur la figure 7. Ce masque de phase a un rayon maximal R de 25 mm et comporte environ 80 anneaux de phase.

Plus précisément, le tableau suivant indique les sauts de phase des anneaux de phase binaires en fonction de la distance radiale (u) sur le masque pupillaire de phase :

| Distance radiale u (mm) | Déphasage D (radians) | Distance radiale u (mm) | Déphasage D (radians) |
|---|---|---|---|
| 0 ≤ u < 11.666667 | $2\pi$ | 17.916667 ≤ u < 18.00000 | $2\pi$ |
| 11.666667 ≤ u < 14.00000 | $\pi$ | 18.00000 ≤ u <18.083333 | $\pi$ |
| 14.00000 ≤ u < 16.00000 | $2\pi$ | 18.083333 ≤ u < 18.25000 | $2\pi$ |
| 16.00000 ≤ u < 17.166667 | $\pi$ | 18.25000 ≤ u < 18.3333 | $\pi$ |
| 17.166667 ≤ u <17.25000 | $2\pi$ | 18.3333 ≤ u < 18.50000 | $2\pi$ |
| 17.25000 ≤ u <17.416667 | $\pi$ | 18.50000 ≤ u < 18.583333 | $\pi$ |
| 17.416667 ≤ u < 17.50000 | $2\pi$ | 18.583333 ≤ u < 18.75000 | $2\pi$ |

(suite)

| Distance radiale u (mm) | Déphasage D (radians) | Distance radiale u (mm) | Déphasage D (radians) |
|---|---|---|---|
| $17.50000 \leq u < 17.583333$ | $\pi$ | $18.75000 \leq u < 18.833333$ | $\pi$ |
| $17.583333 \leq u < 17.666667$ | $2\pi$ | $18.833333 \leq u < 18.916667$ | $2\pi$ |
| $17.666667 \leq u < 17.750000$ | $\pi$ | $18.916667 \leq u < 19.00000$ | $\pi$ |
| $17.750000 \leq u < 17.833333$ | $2\pi$ | $19.00000 \leq u < 19.083333$ | $2\pi$ |
| $17.833333 \leq u < 17.916667$ | $\pi$ | $19.083333 \leq u < 19.166667$ | $\pi$ |
| $19.166667 \leq u < 19.25000$ | $2\pi$ | $22.083333 \leq u < 22.250000$ | $2\pi$ |
| $19.25000 \leq u < 19.416667$ | $\pi$ | $22.250000 \leq u < 22.333333$ | $\pi$ |
| $19.416667 \leq u < 19.50000$ | $2\pi$ | $22.333333 \leq u < 22.416667$ | $2\pi$ |
| $19.50000 \leq u < 19.666667$ | $\pi$ | $22.416667 \leq u < 22.500000$ | $\pi$ |
| $19.666667 \leq u < 19.75000$ | $2\pi$ | $22.500000 \leq u < 22.583333$ | $2\pi$ |
| $19.75000 \leq u < 19.916667$ | $\pi$ | $22.583333 \leq u < 22.666667$ | $\pi$ |
| $19.916667 \leq u < 20.00000$ | $2\pi$ | $22.666667 \leq u < 22.833333$ | $2\pi$ |
| $20.00000 \leq u < 20.083333$ | $\pi$ | $22.833333 \leq u < 22.916667$ | $\pi$ |
| $20.083333 \leq u < 20.166667$ | $2\pi$ | $22.916667 \leq u < 23.083333$ | $2\pi$ |
| $20.166667 \leq u < 20.25000$ | $\pi$ | $23.083333 \leq u < 23.166667$ | $\pi$ |
| $20.25000 \leq u < 20.333333$ | $2\pi$ | $23.166667 \leq u < 23.333333$ | $2\pi$ |
| $20.333333 \leq u < 20.416667$ | $\pi$ | $23.333333 \leq u < 23.416667$ | $\pi$ |
| $20.416667 \leq u < 20.50000$ | $2\pi$ | $23.416667 \leq u < 23.500000$ | $2\pi$ |
| $20.50000 \leq u < 20.583333$ | $\pi$ | $23.500000 \leq u < 23.583333$ | $\pi$ |
| $20.583333 \leq u < 20.666667$ | $2\pi$ | $23.583333 \leq u < 23.666667$ | $2\pi$ |
| $20.666667 \leq u < 20.75000$ | $\pi$ | $23.666667 \leq u < 23.750000$ | $\pi$ |
| $20.75000 \leq u < 20.916667$ | $2\pi$ | $23.750000 \leq u < 23.833333$ | $2\pi$ |
| $20.916667 \leq u < 21.0000$ | $\pi$ | $23.833333 \leq u < 23.916667$ | $\pi$ |
| $21.0000 \leq u < 21.083333$ | $2\pi$ | $23.916667 \leq u < 24.000000$ | $2\pi$ |
| $21.083333 \leq u < 21.166667$ | $\pi$ | $24.000000 \leq u < 24.083333$ | $\pi$ |
| $21.166667 \leq u < 2.1250000$ | $2\pi$ | $24.083333 \leq u < 24.166667$ | $2\pi$ |
| $2.1250000 \leq u < 21.333333$ | $\pi$ | $24.166667 \leq u < 24.250000$ | $\pi$ |
| $21.333333 \leq u < 21.416667$ | $2\pi$ | $24.250000 \leq u < 24.333333$ | $2\pi$ |
| $21.416667 \leq u < 21.583333$ | $\pi$ | $24.333333 \leq u < 24.416667$ | $\pi$ |
| $21.583333 \leq u < 21.666667$ | $2\pi$ | $24.416667 \leq u < 24.500000$ | $2\pi$ |
| $21.666667 \leq u < 21.750000$ | $\pi$ | $24.500000 \leq u < 24.583333$ | $\pi$ |
| $21.750000 \leq u < 21.833333$ | $2\pi$ | $24.583333 \leq u < 24.666667$ | $2\pi$ |
| $21.833333 \leq u < 21.916667$ | $\pi$ | $24.666667 \leq u < 24.750000$ | $\pi$ |
| $21.916667 \leq u < 22.000000$ | $2\pi$ | $24.750000 \leq u < 24.833333$ | $2\pi$ |
| $22.000000 \leq u < 22.083333$ | $\pi$ | $24.833333 \leq u < 24.916667$ | $\pi$ |
| | | $24.916667 \leq u < 25.0000$ | $2\pi$ |

La figure 7 représente le profil radial de phase utilisé pour la fabrication du premier exemple de masque pupillaire de phase tel que défini dans le tableau ci-dessus.

On observe qu'un masque ayant un profil de phase complémentaire, c'est-à-dire ayant, pour chaque anneau, une phase de signe opposé et de même module que dans le tableau ci-dessus, produit un résultat identique.

De plus, un masque de phase ayant un profil de phase déplié, par exemple de manière croissante ou décroissante en partant du centre vers l'extérieur, dans lequel, pour chaque anneau, la valeur de la phase est égale à la valeur indiquée dans le tableau ci-dessus modulo $2\pi$ produit aussi un résultat identique.

Enfin, un masque comportant une combinaison de valeurs de phase identiques, complémentaires et/ou modulo $2\pi$ produit également un résultat identique.

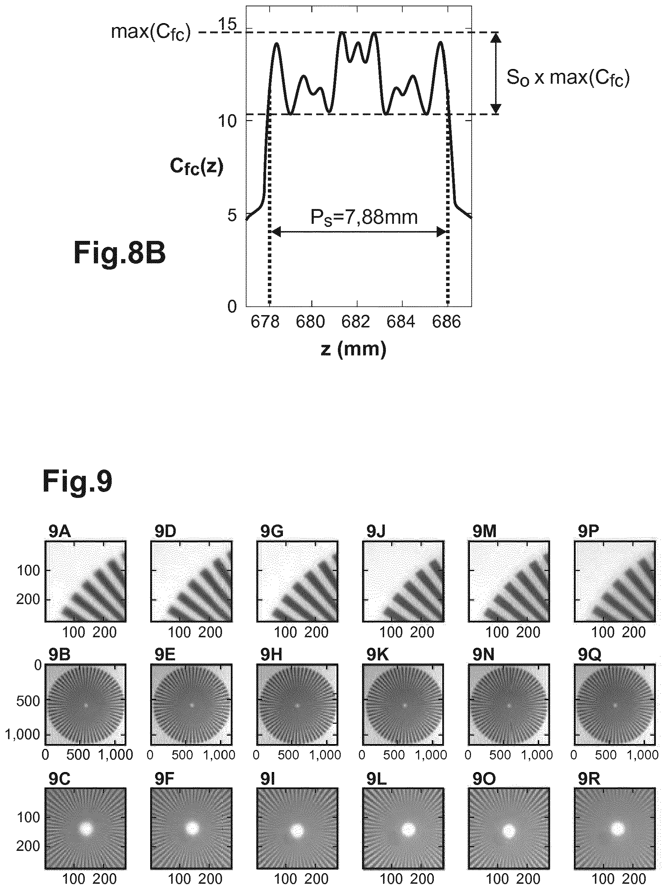

La figure 8A représente la carte de contraste pour un système d'imagerie comprenant le masque de phase, dont le profil de phase est représenté sur la figure 7 en fonction de la fréquence spatiale f et du défaut de mise au point z. Comparée à la figure 4A, on observe une augmentation du contraste C(f, z) dans la gamme utile de fréquences spatiales [-fc; fc]. La figure 8A permet de déterminer le domaine de profondeur de mise au point Pc, associé au critère $C_0$ retenu : $|P_c|$ = 8,36 mm (correspondant à $|\Psi|{\sim}40$). La figure 8B représente une courbe de profil longitudinal de contraste moyenné $C_{fc}(z)$ dans la gamme utile de fréquences spatiales [-fc ; fc] en fonction du défaut de mise au point. La figure 8B permet de déterminer le domaine de profondeur de mise au point Ps en fonction du seuil $S_0$ prédéterminé, ici $|P_S|$ = 7,88 mm. De manière analogue, on détermine le domaine de profondeur de mise au point $P_\Phi$, associé au critère $\Phi_0$ retenu, on trouve ici : $|P_\varphi|$= 8,26 mm.

On déduit le domaine de profondeur de mise au point P de l'intersection du domaine de profondeur de mise au point Pc, du domaine de profondeur de mise au point $P_\Phi$ et du domaine de profondeur de mise au point Ps.

On note que le domaine de profondeur de mise au point Pc et/ou Ps et/ou $P_\varphi$ et/ou P n'est en général pas symétrique par rapport au plan de mise au point ($Z=Z_0$).

Ainsi, l'ajout du masque ayant le profil radial de la figure 7 fait apparaître une valeur d'extension longitudinale du domaine de profondeur de mise au point, c'est-à-dire un intervalle longitudinal d'extension $|P| = |P_C \cap P_S|$= 7,88 mm. Avec des grandeurs d'entrée $C_0$ et $S_0$ identiques, le système sans masque a une valeur d'extension longitudinale du domaine de profondeur de mise au point $|P| = |P_C \cap P_\varphi \cap P_S| = |P_S|$ = 0,65 mm. On a ainsi obtenu une augmentation de l'extension longitudinale du domaine de profondeur de mise au point d'un facteur supérieur à 10, sans post-traitement. En pratique, l'augmentation d'extension longitudinale du domaine de profondeur de mise au point n'induit aucune distorsion de l'image ; elle permet une conservation des fréquences spatiales telle qu'un post-traitement n'est pas obligatoire pour obtenir une image exploitable. L'ajout de ce premier exemple de masque de phase dans un système d'imagerie permet donc de modifier immédiatement le domaine de profondeur de mise au point (ou de manière équivalente, en application des formules de conjugaison optique, de modifier le domaine de profondeur de champ) et sans affecter significativement la luminosité du système d'imagerie.

Les figures 9A-9R représentent des images de mire de Siemens acquises au moyen du système d'imagerie comprenant le premier exemple de masque de phase représenté sur les figures 6 et 7, ces images étant obtenues sans post-traitement. Les figures 9A à 9R sont obtenues pour les mêmes défauts de mise au point respectivement que les figures 5A à 5R, la seule différence entre les figures 5 et 9 étant l'ajout du masque de phase pour la figure 9.

Les images acquises expérimentalement sont en concordance avec les simulations de ce système d'imagerie.

Sur la figure 9A dans le plan de mise au point du système d'imagerie avec masque de phase, on observe une baisse du contraste par comparaison à la figure 5A du même système d'imagerie sans composant optique. Néanmoins, pour un défaut de mise au point important sur la figure 9P (correspondant à $|\Psi|{\sim}40$), on observe une très nette amélioration du contraste comparée à la figure 5P. Grâce à ce système d'imagerie avec masque de phase (tel que représenté sur la figure 7) et sans post-traitement d'image, on obtient effectivement une invariance du contraste des images sur une gamme étendue de fréquences spatiales.

Avec le même masque de phase et le même système d'imagerie optique que décrit en lien avec la figure 7, on applique aux images détectées et numérisées, une étape supplémentaire de post-traitement numérique. Ce post-traitement est par exemple basé sur un traitement de type filtrage de Wiener par la PSF moyenne du système d'imagerie muni du masque de phase résultant du procédé de calcul et de l'algorithme d'optimisation. De manière alternative, un post-traitement de déconvolution de type Lucy-Richardson ou déconvolution aveugle peut être appliqué en se basant sur une PSF moyenne sur le champ et sans hypothèse sur le masque de phase sélectionné.

Un but de ce post-traitement est par exemple d'améliorer la résolution ou le rapport signal à bruit de l'image.

Les figures 10A à 10R montrent les résultats de ce post-traitement d'images appliqué aux images détectées et numérisées telles que représentées sur les figures 9A à 9R, et pour les mêmes défauts de mise au point respectivement que les figures 9A à 9R, la seule différence entre les figures 9 et 10 étant l'étape supplémentaire de post-traitement pour la figure 10.

On constate sur les figures 10A-10R que la mire de Siemens n'apparaît plus floue, mais parfaitement nette, dans la gamme de défaut de mise au point jusque $|\Psi|{\sim}40$ y compris au centre de la mire (Figures 10C, 10F, 10I, 10D, 10O, 10R), c'est-à-dire pour des fréquences spatiales élevées.

• Deuxième exemple d'application

Dans le deuxième exemple d'application, on privilégie le seuil de variation de contraste $S_0$ par rapport à la condition sur le seuil de contraste $C_0$. Cela revient à privilégier un système d'imagerie présentant une valeur d'extension longitudinale du domaine de profondeur de mise au point |P| pouvant être importante, mais au possible détriment de la résolution spatiale. Un tel système d'imagerie (ayant une qualité image relativement moins bonne) peut nécessiter un post-traitement par déconvolution de l'image détectée.

Plus précisément, dans ce deuxième exemple d'application, on choisit le même système optique et le même détecteur d'image que dans le premier exemple d'application. Le rayon de la pupille est porté à 50 mm (nombre d'ouverture F/6) et les grandeurs d'entrée sont fixées à $C_0$ = 0%, $\Phi_0$ = 0 rad. et $S_0$ = 65%. La valeur $C_0$ = 0% ne pose pas de contrainte sur le seuil de contraste minimum. La valeur $\Phi_0$ = 0 rad. maintient la contrainte sur la carte de phase (pas d'inversion de contraste). La valeur du seuil $S_0$ = 65% est relativement élevée et autorise des variations plus importantes du contraste moyen dans la gamme utile de fréquences spatiales. Le profil en phase trouvé de cette manière a un profil radial représenté schématiquement sur la figure 11. Ce deuxième exemple de masque de phase a un rayon maximal de 50 mm et comporte environ une soixantaine d'anneaux de phase présentant des sauts de phase binaires entre $\pi$ et $2\pi$.

Les figures 12A à 12R montrent des images de mire de Siemens acquises au moyen du système d'imagerie comprenant le deuxième exemple de masque de phase, dont le profil de phase radial est représenté sur la figure 11. Les images 12A à 12R ont été obtenues avec un post-traitement du même type que celui appliqué sur les figures 10A-10R.

Les images 12A, 12B, 12C illustrent des images d'une mire de Siemens pour un défaut de mise au point |$\Psi$| = $\pm$0.239 *rad.* Les figures 12D, 12E, 12F illustrent des images de la même mire de Siemens pour un défaut de mise au point |$\Psi$| = $\pm$18.7 *rad.* Les figures 12G, 12H, 12I illustrent des images de la même mire de Siemens pour un défaut de mise au point |$\Psi$| = $\pm$37.7 *rad.* Les figures 12J, 12K, 12L illustrent des images de la même mire de Siemens pour un défaut de mise au point |$\Psi$| = $\pm$56.7 *rad.* Les figures 12M, 12N, 12O illustrent des images de la même mire de Siemens pour un défaut de mise au point |$\Psi$| = $\pm$75.7 *rad.* Les figures 12P, 12Q, 12R illustrent des images de mire de Siemens pour un défaut de mise au point |$\Psi$| = $\pm$94.7 *rad.*

Ce deuxième exemple de masque de phase permet une augmentation de profondeur de champ correspondant à un défaut de mise au point de |$\Psi$|~97.

• Variantes et autres exemples d'application

Dans une variante, on optimise le profil du masque pupillaire de phase à plusieurs longueurs d'onde ou sur une gamme spectrale de longueurs d'onde. Cette variante trouve notamment des applications dans les systèmes optiques utilisés sur une large gamme spectrale, par exemple le visible ou dans les appareils de spectrométrie.

Une application de cette variante concerne la fabrication de lentilles ophtalmiques, dans lesquelles le dioptre externe de la lentille ophtalmique est fabriqué de manière à former un masque de phase, de manière à modifier la profondeur de champ du système d'imagerie constitué par la lentille ophtalmique, la partie antérieure de l'œil et le cristallin, le détecteur d'image étant la rétine de l'utilisateur. Dans une autre application du domaine de l'ophtalmologie, le masque de phase est directement gravé sur un cristallin naturel ou synthétique, par exemple par un procédé de traitement ophtalmologique laser. Ainsi, une augmentation de la profondeur de champ permet avantageusement de compenser une réserve d'accommodation très réduite chez certains patients.

Dans une autre application, on détermine un profil de masque de phase pour un système d'imagerie optique suivant le procédé décrit ci-dessus mais dans un autre but : le filtrage sélectif de certaines fréquences spatiales. A cet effet, on détermine la ou les fréquences spatiales pour lesquelles on souhaite un contraste en dessous de la valeur seuil.

Dans une autre application, il peut être souhaitable de réduire la profondeur de champ d'un système d'imagerie. Ce cas se présente par exemple en microscopie, lorsqu'on souhaite obtenir des images résolues en profondeur avec une résolution inférieure à la profondeur de champ usuelle du système d'imagerie. Le couplage d'un masque de phase permet de modifier la profondeur de champ sans réduire la résolution spatiale dans cette zone limitée.

Le procédé de l'invention s'interface avantageusement avec un logiciel de calcul de système optique, tel que le logiciel Zemax ou un équivalent. Ainsi le concepteur d'un système d'imagerie dispose d'un logiciel permettant à la fois de combiner une simulation du tracé de rayons dans le système d'imagerie et une optimisation d'un compromis entre la qualité image et la profondeur de champ (ou de la profondeur de mise au point).

Dispositif

Le filtre spatial se présente avantageusement sous la forme d'un masque de phase destiné à être inséré dans un système d'imagerie existant. Si la pupille du système optique est accessible, ce filtre spatial est de préférence disposé dans le plan pupillaire ou au voisinage du plan pupillaire. Si la pupille du système optique est accessible, on dispose un autre système optique (à lentilles, à miroir ou autre) de manière à ce que le filtre spatial soit conjugué optiquement avec le plan pupillaire du système d'imagerie. De façon optionnelle, cet autre système optique peut produire un grandissement optique. Ainsi, on réalise une fonction pupillaire de phase en combinaison avec le système d'imagerie.

Le masque de phase peut être réalisé aisément par différentes techniques de fabrication : par exemple par lithographie ou par attaque ionique ou encore par usinage diamant d'un support. Un tel masque de phase peut facilement être répliqué par moulage pour une production en série à bas coût. On détermine en fonction de l'indice de réfraction du matériau optique du support, l'épaisseur correspondant au déphasage souhaité à la longueur d'onde $\lambda$ d'utilisation. Dans un exemple de réalisation, le support du masque de phase est constitué d'une lame de verre à faces planes et parallèles. De manière alternative et particulièrement avantageuse, le masque de phase peut être fabriqué directement sur un dioptre du système optique.

Dans un exemple d'application, le masque de phase obtenu suivant le procédé décrit ci-dessus est réalisé directement sur la face convexe d'une lentille ophtalmique. Dans ce cas, le détecteur d'image étant l'œil d'une personne, on privilégie une conception de masque de phase ne nécessitant pas de post-traitement d'image.

Dans le cas d'un masque constitué d'anneaux de phase à sauts de phase binaire, par exemple entre 0 et $\pi$, il est très aisé et peu couteux de fabriquer des anneaux introduisant un déphasage D de 0 ou $\pi$ en transmission. Dans le cas d'un masque constitué d'anneaux de phase à sauts de phases discrets de $\pi/N$, où N est un nombre entier supérieur ou égal à 2, le procédé de fabrication se fait en général par étapes successives et est plus couteux à réaliser comparé à un masque de phase binaire.

Un masque pupillaire peut être réalisé sur une lame d'un matériau réfractif à la longueur d'onde d'utilisation par des techniques connues de photolithographie avec une excellente précision transverse et de déphasage. Les tolérances de fabrication ne posent pas de difficultés particulières à l'homme du métier dans le domaine de la fabrication de composants pour la microélectronique ou l'optoélectronique. Ce masque peut ensuite être répliqué par moulage à de nombreux exemplaires et à très bas coût de fabrication.

Le masque de phase peut aussi être généré dynamiquement sur un composant actif tel qu'un modulateur spatial de phase, par exemple à base d'une matrice de cristaux liquides ou d'un miroir déformable, dans lequel une phase locale variable à la demande peut être commandée via un module électronique. Ce mode de réalisation est particulièrement intéressant dans les systèmes d'imagerie ayant une ouverture variable et/ou une focale variable ou une réponse spectrale variable, par exemple les caméras munies d'un diaphragme d'ouverture variable, d'un zoom ou un microscope de grossissement variable ou encore un spectromètre. Dans ce cas, on calcule à l'avance une série de masques de phase optimisés pour une série de valeurs d'ouverture et/ou de focale et/ou de grossissement et/ou de gamme spectrale, et on commande le modulateur spatial de phase de manière à générer le masque de phase optimisé correspondant aux conditions d'utilisation souhaitées.

**Revendications**

1. Procédé de conception d'un système d'imagerie comprenant un système optique (10) ayant un axe optique longitudinal (12), un détecteur d'image (30) et un filtre spatial (50), le système d'imagerie étant configuré pour former une image d'un plan de mise au point (20) sur le détecteur d'image (30), le procédé comprenant les étapes suivantes :

    a) Initialisation d'une position longitudinale ($z_0$) du plan de mise au point (20) et d'une position longitudinale ($z'_0$) du détecteur d'image (30), le système optique (10) conjuguant optiquement la position longitudinale ($z_0$) du plan de mise au point (20) et la position longitudinale ($z'_0$) du détecteur d'image (30) sur l'axe optique longitudinal (12) ;
    b) initialisation d'une fonction pupillaire de phase (15) du filtre spatial (50) dans le plan pupillaire (13) du système optique (10),
    c) calcul d'une fonction de transfert optique (FTO) du système optique (10) combiné avec le filtre spatial (50), en fonction, d'une part, de la fréquence spatiale (f) et, d'autre part, du défaut de mise au point ($\Psi$) ;
    d) détermination d'une carte de contraste et d'une carte de phase, la carte de contraste étant égale au module de la fonction de transfert optique (FTO) en fonction, d'une part, de la fréquence spatiale (f), et, d'autre part, du défaut de mise au point ($\Psi$), et la carte de phase étant égale à l'argument de la fonction de transfert optique (FTO) en fonction, d'une part, de la fréquence spatiale (f), et, d'autre part, du défaut de mise au point ($\Psi$), dans lequel l'étape d) comprend les étapes i) à l) suivantes :

        i) initialisation d'un seuil de contraste ($C_0$), d'un seuil de déphasage ($\Phi_0$) et d'un seuil de variation moyenne du contraste ($S_0$) ;
        j) détermination, à partir de la carte de contraste calculée à l'étape d) d'un premier domaine de profondeur de mise au point (Pc), pour lequel la valeur du contraste est supérieure ou égale au seuil de contraste ($|C_0|$) dans la gamme utile de fréquences spatiales ([-fc ; fc]);

k) détermination, à partir de la carte de phase calculée à l'étape d) d'un deuxième domaine de profondeur de mise au point ($P_\varphi$), pour lequel la phase est inférieure ou égale au seuil de déphasage ($\Phi_0$) dans la gamme utile de fréquences spatiales ([-fc ; fc]) ;

l) détermination d'un troisième domaine de profondeur de mise au point ($P_S$), pour lequel la variation moyenne de contraste moyenné dans la gamme utile de fréquences spatiales ([-fc ; fc]) est inférieure ou égale au seuil de variation moyenne du contraste ($S_0$) ;

e) détermination, à partir de la carte de contraste et de la carte de phase obtenues à l'étape d), d'un domaine de profondeur de mise au point (P) du système d'imagerie dans la gamme utile de fréquences spatiales ([-fc ; fc]) et calcul d'une valeur d'extension longitudinale (|P|) dudit domaine de profondeur de mise au point (P), le domaine de profondeur de mise au point (P) étant déterminé par intersection du premier domaine de profondeur de mise au point (Pc) avec le deuxième domaine de profondeur de mise au point ($P\varphi$) et avec le troisième domaine de profondeur de mise au point (PS) ;

f) évaluation d'une fonction de mérite de ladite fonction pupillaire de phase du filtre spatial (50) en fonction de la valeur d'extension longitudinale (|P|) du domaine de profondeur de mise au point (P) du système d'imagerie dans la gamme utile de fréquences spatiales ([-fc ; fc]);

g) réitération des étapes b) à f) pour une autre fonction pupillaire de phase (15) du filtre spatial (50) ;

h) sélection, à partir d'une pluralité d'évaluations de la fonction de mérite correspondant respectivement à une pluralité de fonctions pupillaires de phase (15) du filtre spatial (50), d'une fonction de phase pupillaire déterminée permettant au système d'imagerie de présenter une valeur déterminée d'extension longitudinale (|P|) du domaine de profondeur de mise au point (P) dans la gamme utile de fréquences spatiales ([-$f_c$ ; $f_c$]).

2. Procédé de conception d'un système d'imagerie selon la revendication 1, dans lequel l'étape f) comprend l'étape suivante :

n) calcul, en fonction du défaut de mise au point ($\Psi$), du contraste moyen ($\overline{C}$) du système d'imagerie moyenné dans la gamme utile de fréquences spatiales ([-$f_c$ ; $f_c$]) et pour ledit domaine de profondeur de mise au point (P) déterminée à l'étape e);

o) et dans lequel à l'étape d'évaluation d'une fonction de mérite de ladite fonction pupillaire de phase (15) du filtre spatial (50), la fonction de mérite est fonction, d'une part, de la valeur d'extension longitudinale (|P|) du domaine de profondeur de mise au point (P) du système d'imagerie déterminée à l'étape e) et, d'autre part, du contraste moyen ($\overline{C}$) calculé à l'étape n) dans la gamme utile de fréquences spatiales ([-fc ; fc]).

3. Procédé de conception d'un système d'imagerie selon l'une des revendications 1 à 2, dans lequel la pupille est de forme circulaire centrée sur l'axe optique (12), et dans lequel la fonction pupillaire de phase (15) du filtre spatial (50) est symétrique de révolution autour de l'axe optique (12) ou à symétrie de révolution partielle la fonction pupillaire de phase du filtre spatial (50) étant décomposée en secteurs angulaires.

4. Procédé de conception d'un système d'imagerie selon l'une des revendications 1 à 3, dans lequel la fonction pupillaire de phase (15) du filtre spatial comporte une série de valeurs de phases discrètes.

5. Procédé de conception d'un système d'imagerie selon la revendication 4, dans lequel la fonction pupillaire de phase (15) du filtre spatial comporte des valeurs de phases binaires.

6. Procédé de conception d'un système d'imagerie selon l'une des revendications 1 à 2, dans lequel la fonction pupillaire de phase (15) du filtre spatial est une fonction polynomiale de la distance radiale par rapport au centre de la pupille.

7. Procédé de conception d'un système d'imagerie selon l'une des revendications 1 à 6, dans lequel la pupille du système optique est asymétrique autour de l'axe optique.

8. Procédé de conception d'un système d'imagerie selon l'une des revendications 1 à 7, dans lequel l'étape g) d'évaluation d'une fonction de mérite comporte une étape de calcul du produit de la valeur d'extension longitudinale (|P|) du domaine de profondeur de mise au point (P) par le contraste moyen ($\overline{C}$) affecté d'un coefficient de puissance numérique ($\gamma$), ce coefficient de puissance numérique ($\gamma$) étant un nombre réel.

9. Procédé de conception d'un système d'imagerie selon l'une des revendications 1 à 8 comportant une étape de détermination d'une valeur d'extension longitudinale du domaine de profondeur de champ en fonction de la valeur d'extension longitudinale (|P|) du domaine de profondeur de mise au point (P).

**10.** Filtre spatial (50) pour un système d'imagerie comprenant un détecteur d'image et un système optique (10) ayant un plan pupillaire (13), le filtre spatial (50) étant destiné à être placé dans le plan pupillaire (13) ou dans un plan optiquement conjugué avec le plan pupillaire (13), le filtre spatial (50) étant symétrique de révolution autour de l'axe optique, le filtre spatial (50) comporte environ une soixantaine à 80 anneaux de phase présentant des sauts de phase binaires entre $\pi$ et $2\,\pi$, le filtre spatial (50) formant un masque de phase dans le plan pupillaire adapté pour modifier une carte de contraste et/ou une carte de phase du système d'imagerie sur un domaine de profondeur de mise au point (P) et sur une gamme utile de fréquences spatiales ([-fc; fc]), la carte de contraste étant égale au module, respectivement la carte de phase étant égale à la phase, de la fonction de transfert optique (FTO) du système optique (10) combiné avec le filtre spatial (50) en fonction, d'une part, de la fréquence spatiale (f), et, d'autre part, du défaut de mise au point ($\Psi$), le filtre spatial (50) disposé dans le plan de la pupille du système optique ou dans un plan optiquement conjugué avec le plan de la pupille du système optique forme, dans le plan pupillaire (13), un masque de phase ayant une fonction pupillaire de phase (15), ladite fonction pupillaire de phase (15) étant déterminée suivant le procédé de la revendication 1, le filtre spatial (50) combiné au système optique (10) permettant d'obtenir une valeur d'extension longitudinale (|P|) du domaine de profondeur de mise au point (P) supérieure, d'un facteur multiplicateur au moins égal à 10 , à la profondeur de mise au point (PM) calculée géométriquement dudit système d'imagerie dépourvu dudit filtre spatial (50).

**11.** Système d'imagerie comprenant :

- un système optique (10) ;
- un détecteur d'image (30) ; et
- un filtre spatial (50) selon la revendication 10, disposé au voisinage d'un plan pupillaire (13) du système optique (10) ou dans un plan conjugué optiquement avec le plan pupillaire (13) du système optique (10) ;
- le système d'imagerie étant configuré pour former une image d'un plan de mise au point (20) sur le détecteur d'image (30).

**12.** Système d'imagerie selon la revendication 11 comportant en outre un système d'acquisition d'image adapté pour acquérir une image numérique détectée par le détecteur d'image (30) et un système de traitement d'image configuré pour appliquer un post-traitement numérique à l'image numérique acquise par le système d'acquisition d'image, le post-traitement numérique étant fonction du filtre spatial (50) associé à ladite valeur d'extension longitudinale (|P|) du domaine de profondeur de mise au point (P) et au contraste moyen ($\overline{C}$).

**13.** Système d'imagerie selon la revendication 11 comportant un modulateur spatial de phase, le modulateur spatial de phase étant configuré pour former ledit filtre spatial (50) et ledit modulateur spatial de phase étant modulable dynamiquement.

**Patentansprüche**

**1.** Verfahren zum Entwerfen eines Bildgebungssystems mit einem eine optische Längsachse (12) aufweisenden optischen System (10), einem Bildsensor (30) und einem Raumfilter (50), wobei das Bildsystem dazu ausgelegt ist, auf dem Bildsensor (30) ein Bild einer Fokussierebene (20) zu bilden, wobei das Verfahren die folgenden Schritte aufweist:

a) Initialisierung einer Längsposition ($z_0$) der Fokussierebene (20) und einer Längsposition ($z'_0$) des Bildsensors (30), wobei das optische System (10) die Längsposition ($z_0$) der Fokussierebene (20) und die Längsposition ($z'_0$) des Bildsensors (30) auf der optischen Längsachse (12) optisch konjugiert,
b) Initialisierung einer Phasen-Pupillenfunktion (15) des Raumfilters (50) in der Pupillenebene (13) des optischen Systems (10),
c) Berechnung einer optischen Transferfunktion (FTO) des mit dem Raumfilter (50) kombinierten optischen Systems (10) in Abhängigkeit von der Raumfrequenz (f) einerseits und vom Fokussierfehler ($\psi$) andererseits,
d) Bestimmung einer Kontrastkarte und einer Phasenkarte, wobei die Kontrastkarte gleich dem Modul der optischen Transferfunktion (FTO) in Abhängigkeit von der Raumfrequenz (f) einerseits und vom Fokussierfehler ($\psi$) andererseits ist, und wobei die Phasenkarte gleich dem Argument der optischen Transferfunktion (FTO) in Abhängigkeit von der Raumfrequenz (f) einerseits und vom Fokussierfehler ($\psi$) andererseits ist, wobei der Schritt d) die folgenden Schritte i) bis 1) aufweist:

i) Initialisierung einer Kontrastschwelle ($C_0$), einer Phasenverschiebungsschwelle ($\Phi_0$) und einer Schwelle

($S_0$) der mittleren Variation des Kontrasts,

j) von der im Schritt d) berechneten Kontrastkarte ausgehend, Bestimmung eines ersten Bereichs der Schärfentiefe ($P_C$), für den der Wert des Kontrasts größer als oder gleich der Kontrastschwelle ($|C_0|$) im Nutzbereich der Raumfrequenzen ($[-f_c; f_c]$) ist,

k) von der im Schritt d) berechneten Phasenkarte ausgehend, Bestimmung eines zweiten Bereichs der Schärfentiefe ($P_\varphi$), für den die Phase kleiner als oder gleich der Phasenverschiebungsschwelle ($\Phi_0$) im Nutzbereich der Raumfrequenzen ($[-f_c; f_c]$) ist,

1) Bestimmung eines dritten Bereichs der Schärfentiefe (Ps), für den die mittlere Variation des gemittelten Kontrasts im Nutzbereich der Raumfrequenzen ($[-f_c; f_c]$) kleiner als oder gleich der Schwelle ($S_0$) der mittleren Variation des Kontrasts ist,

e) von der im Schritt d) erhaltenen Kontrastkarte und Phasenkarte ausgehend, Bestimmung eines Bereichs der Schärfentiefe (P) des Bildsystems im Nutzbereich der Raumfrequenzen ($[-f_c; f_c]$) und Berechnung eines Längsausdehnungswerts ($|P|$) des Bereichs der Schärfentiefe (P), wobei der Bereich der Schärfentiefe (P) durch Schneiden des ersten Bereichs der Schärfentiefe ($P_C$) mit dem zweiten Bereich der Schärfentiefe ($P_\varphi$) und dem dritten Bereich der Schärfentiefe ($P_S$) bestimmt wird,

f) Bewertung einer Gütefunktion der Phasen-Pupillenfunktion des Raumfilters (50) in Abhängigkeit vom Längsausdehnungswert ($|P|$) des Bereichs der Schärfentiefe (P) des Bildgebungssystems im Nutzbereich der Raumfrequenzen ($[-f_c; f_c]$),

g) Wiederholung der Schritte b) bis f) für eine andere Phasen-Pupillenfunktion (15) des Raumfilters (50),

h) von einer Anzahl Bewertungen der Gütefunktion, die jeweils einer Anzahl Phasen-Pupillenfunktionen (15) des Raumfilters (50) entsprechen, ausgehend, Auswahl einer bestimmten Phasen-Pupillenfunktion, die dem Bildgebungssystem ermöglicht, einen bestimmten Längsausdehnungswert ($|P|$) des Bereichs der Schärfentiefe (P) im Nutzbereich der Raumfrequenzen ($[-f_c; f_c]$) auszuwählen.

2. Verfahren zum Entwerfen eines Bildgebungssystems gemäß Anspruch 1, bei dem der Schritt f) den folgenden Schritt aufweist:

n) in Abhängigkeit vom Fokussierfehler ($\psi$), Berechnen des im Nutzbereich der Raumfrequenzen ($[-f_c; f_c]$) gemittelten mittleren Kontrasts ($\overline{C}$) des Bildgebungssystems und für den im Schritt e) bestimmten Bereich der Schärfentiefe (P),

o) und bei dem beim Schritt der Bewertung einer Gütefunktion der Phasen-Pupillenfunktion des Raumfilters (50) die Gütefunktion einerseits vom im Schritt e) ermittelten Längsausdehnungswert ($|P|$) des Bereichs der Schärfentiefe (P) des Bildgebungssystems und andererseits vom im Schritt n) im Nutzbereich der Raumfrequenzen ($[-f_c; f_c]$) berechneten gemittelten mittleren Kontrast ($\overline{C}$) abhängt.

3. Verfahren zum Entwerfen eines Bildgebungssystems gemäß einem der Ansprüche 1 bis 2, bei dem die Pupille kreisförmig und auf die optische Achse (12) zentriert ist und bei dem die Phasen-Pupillenfunktion (15) des Raumfilters (50) um die optische Achse (12) rotationssymmetrisch oder teilweise rotationssymmetrisch ist, wobei die Phasen-Pupillenfunktion des Raumfilters (50) in Winkelsektoren unterteilt ist.

4. Verfahren zum Entwerfen eines Bildgebungssystems gemäß einem der Ansprüche 1 bis 3, bei dem die Phasen-Pupillenfunktion (15) des Raumfilters eine Reihe Werte diskreter Phasen aufweist.

5. Verfahren zum Entwerfen eines Bildgebungssystems gemäß Anspruch 4, bei dem die Phasen-Pupillenfunktion (15) des Raumfilters Werte binärer Phasen aufweist.

6. Verfahren zum Entwerfen eines Bildgebungssystems gemäß einem der Ansprüche 1 bis 2, bei dem die Phasen-Pupillenfunktion (15) des Raumfilters eine polynomiale Funktion des radialen Abstands vom Mittelpunkt der Pupille ist.

7. Verfahren zum Entwerfen eines Bildgebungssystems gemäß einem der Ansprüche 1 bis 6, bei dem die Pupille des optischen Systems um die optische Achse asymmetrisch ist.

8. Verfahren zum Entwerfen eines Bildgebungssystems gemäß einem der Ansprüche 1 bis 7, bei dem der Schritt g) der Bewertung einer Gütefunktion einen Schritt der Berechnung des Produkts aus dem Längsausdehnungswert ($|P|$) des Bereichs der Schärfentiefe (P) und dem mit einem Koeffizienten einer numerischen Potenz ($\gamma$) versehenen mittleren Kontrast ($\overline{C}$) aufweist, wobei der Koeffizient einer numerischen Potenz ($\gamma$) eine reelle Zahl ist.

9. Verfahren zum Entwerfen eines Bildgebungssystems gemäß einem der Ansprüche 1 bis 8, das einen Schritt des Bestimmens eines Längsausdehnungswerts des Bereichs der Schärfentiefe in Abhängigkeit vom Längsausdehnungswert ($|P|$) des Bereichs der Schärfentiefe (P) aufweist.

10. Raumfilter (50) für ein Bildgebungssystem, das einen Bildsensor und ein optisches System (10) mit einer Pupillenebene (13) aufweist, wobei das Raumfilter (50) dazu bestimmt ist, in der Pupillenebene (13) oder in einer zur Pupillenebene (13) optisch konjugierten Ebene platziert zu werden, wobei das Raumfilter (50) rotationssymmetrisch um die optische Achse ist, wobei das Raumfilter (50) ungefähr 60 bis 80 Phasenringe aufweist, die binäre Phasensprünge zwischen $\pi$ und $2\pi$ aufweisen, wobei das Raumfilter (50) eine Phasenmaske in der Pupillenebene bildet, die dazu ausgelegt ist, eine Kontrastkarte und/oder eine Phasenkarte des Bildgebungssystems in einem Bereich der Schärfentiefe (P) und über einen Nutzbereich von Raumfrequenzen ($[-f_c ; f_c]$) zu ändern, wobei die Kontrastkarte gleich dem Modul und die Phasenkarte gleich der Phase der optischen Transferfunktion (FTO) des optischen Systems (10) in Kombination mit dem Raumfilter (50) ist, und zwar in Abhängigkeit von der Raumfrequenz (f) einerseits und vom Fokussierfehler ($\psi$) andererseits, wobei das in der Pupillenebene (13) des optischen Systems oder in einer zur Pupillenebene (13) des optischen Systems optisch konjugierten Ebene platzierte Raumfilter (50) in der Pupillenebene (13) eine Phasenmaske bildet, die eine Phasen-Pupillenfunktion (15) aufweist, wobei die Phasen-Pupillenfunktion (15) nach dem Verfahren gemäß Anspruch 1 bestimmt wird, wobei das mit dem optischen System (10) kombinierte Raumfilter (50) ermöglicht, einen Längsausdehnungswert ($|P|$) des Bereichs der Schärfentiefe (P) zu erhalten, der um einen Multiplikationsfaktor von wenigstens gleich 10 größer als die geometrisch berechnete Schärfentiefe (PM) des nicht mit einem Raumfilter (50) versehenen Bildgebungssystems ist.

11. Bildgebungssystem mit

- einem optischen System (10),
- einem Bildsensor (30) und
- einem Raumfilter (50) gemäß Anspruch 10, das in der Nähe einer Pupillenebene (13) des optischen Systems (10) oder in einer zur Pupillenebene (13) des optischen Systems (10) optisch konjugierten Ebene angeordnet ist,
- wobei das Bildgebungssystem dazu ausgelegt ist, auf dem Bildsensor (30) ein Bild einer Fokussierebene (20) zu bilden.

12. Bildgebungssystem gemäß Anspruch 11, das außerdem ein Bilderfassungssystem, das dazu ausgelegt ist, ein durch den Bildsensor (30) aufgenommenes digitales Bild zu erfassen, und ein Bildbearbeitungssystem, das dazu ausgelegt ist, auf das durch das Bilderfassungssystem erfaßte digitale Bild eine digitale Nachbearbeitung anzuwenden, aufweist, wobei die digitale Nachbearbeitung vom dem Längsausdehnungswert ($|P|$) des Bereichs der Schärfentiefe (P) und dem mittleren Kontrast ($\overline{C}$) zugeordneten Raumfilter (50) abhängt.

13. Bildgebungssystem gemäß Anspruch 11 mit einem Phasen-Raummodulator, wobei der Phasen-Raummodulator dazu ausgelegt ist, das Raumfilter (50) zu bilden, und wobei der Phasen-Raummodulator dynamisch modulierbar ist.

**Claims**

1. A method of designing an imaging system comprising an optical system (10) having a longitudinal optical axis (12), an image sensor (30) and a spatial filter (50), the imaging system being configured so as to form an image of a focusing plane (20) on the image sensor (30), the method comprising the following steps:

a) initializing a longitudinal position ($z_0$) of the focusing plane (20) and a longitudinal position ($z'_0$) of the image sensor (30), the optical system (10) optically conjugating the longitudinal position ($z_0$) of the focusing plane (20) and the longitudinal position ($z'_0$) of the image sensor (30) on the longitudinal optical axis (12);
b) initializing a pupil phase function (15) of the spatial filter (50) in the pupil plane (13) of the optical system (10),
c) calculating an optical transfer function (FTO) of the optical system (10) combined with the spatial filter (50), as a function, on the one hand, of the spatial frequency (f), and on the other hand, of the focusing defect ($\Psi$);
d) determining a contrast map and a phase map, the contrast map being equal to the module of the optical transfer function (FTO) as a function, on the one hand, of the spatial frequency (f), and on the other hand, of the focusing defect ($\Psi$), and the phase map being equal to the argument of the optical transfer function (FTO) as a function, on the one hand, of the spatial frequency (f), and on the other hand, of the focusing defect ($\Psi$), wherein step d) comprises the following steps:

i) initializing a contrast threshold (C0), a phase-shift threshold (Φ0) and a contrast average variation threshold (S0);

j) determining, from the contrast map calculated at step d), a first focusing depth domain (Pc), for which the contrast value is higher than or equal to the contrast threshold (|C0|) in the useful range of spatial frequencies ([-fc; fc]);

k) determining, from the phase map calculated at step d), a second focusing depth domain (Pφ), for which the phase is lower than or equal to the phase-shift threshold ($\Phi_0$) in the useful range of spatial frequencies ([-fc; fc]);

l) determining a third focusing depth domain (Ps), for which the average variation of contrast averaged in the useful range of spatial frequencies ([-fc; fc]) is lower than or equal to the contrast average variation threshold (S0);

e) determining, from the contrast map and the phase map obtained at step d), a focusing depth domain (P) of the imaging system in the useful range of spatial frequencies ([-fc; fc]) and calculating a value of longitudinal extension (|P|) of said focusing depth domain (P), the focusing depth domain (P) being determined by the intersection of the first focusing depth domain (Pc) with the second focusing depth domain (Pφ) and with the third focusing depth domain (PS);

f) evaluating a merit function of said pupil phase function of the spatial filter (50) as a function of the value of longitudinal extension (|P|) of the focusing depth domain of the imaging system in the useful range of spatial frequencies ([-fc; fc]);

g) reiterating the steps b) to f) for another pupil phase function (15) of the spatial filter (50);

h) selecting, from a plurality of evaluations of the merit function corresponding to a plurality of pupil phase functions (15) of the spatial filter (50), respectively, a determined pupil phase function allowing the imaging system to have a determined value of longitudinal extension (|P|) of the focusing depth domain (P) in the useful range of spatial frequencies ([-$f_c$; $f_c$]).

2. A method of designing an imaging system according to claim 1, wherein step f) comprises the following step:

n) calculating, as a function of the focusing defect (Ψ), the average contrast ($\overline{C}$) of the imaging system averaged in the useful range of spatial frequencies ([-fc; fc]) and for said focusing depth domain (P) determined at step e);

o) and wherein at step of evaluating a merit function representative of said pupil phase function (15) of the spatial filter (50), the merit function is function, on the one hand, of the value of longitudinal extension (|P|) of the focusing depth domain (P) of the imaging system determined at step e), and on the other hand, of the average contrast ($\overline{C}$) calculated at step n) in the useful range of spatial frequencies ([-fc; fc]).

3. A method of designing an imaging system according to one of claims 1 to 2, wherein the pupil is of circular shape centred on the optical axis (12), and wherein the pupil phase function (15) of the spatial filter (50) has a symmetry of revolution about the optical axis (12) or a partial symmetry of revolution, the pupil phase function of the spatial filter (50) being decomposed into angular sectors.

4. A method of designing an imaging system according to one of claims 1 to 3, wherein the pupil phase function (15) of the spatial filter includes a series of discrete phase values.

5. A method of designing an imaging system according to claim 4, wherein the pupil phase function (15) of the spatial filter includes binary phase values.

6. A method of designing an imaging system according to one of claims 1 to 2, wherein the pupil phase function (15) of the spatial filter is a polynomial function of the radial distance with respect to the centre of the pupil.

7. A method of designing an imaging system according to one of claims 1 to 6, wherein the pupil of the optical system is asymmetric about the optical axis.

8. A method of designing an imaging system according to one of claims 1 to 7, wherein step g) of evaluating a merit function includes a step of calculating the product of the value of longitudinal extension (|P|) of the focusing depth domain (P) by the average contrast ($\overline{C}$) affected by a digital power coefficient ($\gamma$), this digital power coefficient ($\gamma$) being a real number.

9. A method of designing an imaging system according to one of claims 1 to 8, including a step of determining a value of longitudinal extension of the depth of field domain as a function of the value of longitudinal extension (|P|) of the focusing depth domain (P).

10. A spatial filter (50) for an imaging system comprising an image sensor and an optical system (10) having a pupil plane (13), the spatial filter (50) being intended to be placed in the pupil plane (13) or in a plane optically conjugated with the pupil plane (13), the spatial filter has a symmetry of revolution about the optical axis, the spatial filter (50) comprising about 80 phase rings presenting binary phase-shiftings between $\pi$ and $2\pi$, the spatial filter (50) forming a phase mask in the pupil plane adapted to modify a contrast map and/or a phase map of the imaging system over a focusing depth domain (P) and over a useful range of spatial frequencies ([-fc; fc]), the contrast map being equal to the module, respectively the phase map being equal to the phase, of the optical transfer function (FTO) of the optical system (10) combined with the spatial filter (50), as a function, on the one hand, of the spatial frequency (f), and on the other hand, of the focusing defect ($\Psi$), the spatial filter (50) arranged in the plane of the optical system pupil or in a plane optically conjugated with the plane of the optical system pupil forms, in the pupil plane (13), a phase mask having a pupil phase function (15), said pupil phase function (15) being determined according to the method of claim 1, the spatial filter combined with the optical system enabling to obtain a value of longitudinal extension (|P|) of the focusing depth domain (P) higher, by a multiplication factor at least equal to 10, than the geometrically calculated focusing depth (PM) of said imaging system without said spatial filter (50).

11. An imaging system comprising:

  - an optical system (10);
  - an imaging sensor (30); and
  - a spatial filter (50) according to claim 10 arranged near a pupil plane (13) of the optical system (10) or in a plane optically conjugated with the pupil plane (13) of the optical system (10);
  - the imaging system being configured to form an image of a focusing plane (20) on the image sensor (30).

12. An imaging system according to claim 11, further including an image acquisition system adapted to acquire a digital image sensed by the image sensor (30) and an image processing system configured to apply a digital post-processing to the digital image acquired by the image acquisition system, the digital post-processing being function of the spatial filter (50) associated with said value of longitudinal extension (|P|) of the focusing depth domain (P) and with the average contrast ($\overline{C}$).

13. An imaging system according to claim 11, including a spatial phase modulator, the spatial phase modulator being configured to form said spatial filter (50) and said spatial phase modulator being able to be dynamically modulated.

# Fig.1

# Fig.2

## Fig.3

## Fig.4A

## Fig.4B

## Fig.5

**Fig.6**

**Fig.7**

**Fig.8A**

Fig.8B

Fig.9

# Fig.10

# Fig.11

# Fig.12

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2015004659 A1

- FR 2919733 A1

**Littérature non-brevet citée dans la description**

- **J. OJEDA-CASTANEDA et al.** Ambiguity Function as a Design Tool for high focal depth. *Appl. Opt.,* 1988, vol. 27 (4
- **CATHEY ; E. DOWSKI.** New Paradigm for Imaging System. *Appl. Opt.,* 2002, vol. 41

- **H. WANG et al.** High Focal Depth with a Pure-Phase Apodizer. *Appl. Optics,* 2001, vol. 40 (31
- **YANG et al.** Optimized phase pupil masks for extended depth of field. *Optics Comm.,* 2007, vol. 272 (1), 56-66